(19) Europäisches Patentamt

European Patent Office

Office européen des brevets

(11) **EP 4 197 162 B1**

(12) **EUROPEAN PATENT SPECIFICATION**

(45) Date of publication and mention
of the grant of the patent:
**11.09.2024 Bulletin 2024/37**

(21) Application number: **20774954.0**

(22) Date of filing: **17.09.2020**

(51) International Patent Classification (IPC):
***H04L 9/40*** *(2022.01)*

(52) Cooperative Patent Classification (CPC):
**H04L 63/0428; H04L 63/062;** H04L 2463/061

(86) International application number:
**PCT/EP2020/075922**

(87) International publication number:
**WO 2022/058008 (24.03.2022 Gazette 2022/12)**

(54) **SYNCHRONIZATION OF SENSITIVE INFORMATION BETWEEN MULTIPLE NETWORK NODES**

SYNCHRONISATION VON SENSIBLEN INFORMATIONEN ZWISCHEN MEHREREN
NETZWERKKNOTEN

SYNCHRONISATION D'INFORMATIONS SENSIBLES ENTRE DE MULTIPLES NOEUDS DE
RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023 Bulletin 2023/25**

(73) Proprietor: **Huawei Technologies Co., Ltd.
Shenzhen, Guangdong 518129 (CN)**

(72) Inventor: **LI, Yong
80992 Munich (DE)**

(74) Representative: **MERH-IP Matias Erny Reichl
Hoffmann
Patentanwälte PartG mbB
Paul-Heyse-Strasse 29
80336 München (DE)**

(56) References cited:
US-A1- 2019 386 814

- PARK JAEMIN ET AL: "Advanced
Attribute-Based Key Management for Mobile
Devices in Hybrid Clouds", 2015 10TH
INTERNATIONAL CONFERENCE ON
AVAILABILITY, RELIABILITY AND SECURITY,
IEEE, 24 August 2015 (2015-08-24), pages 566 -
575, XP032795296, DOI: 10.1109/ARES.2015.27
- NOOR MANAN BINTH TAJ ET AL: "A secure data
security infrastructure for small organization in
cloud computing", 2015 INTERNATIONAL
CONFERENCE ON ELECTRICAL ENGINEERING
AND INFORMATION COMMUNICATION
TECHNOLOGY (ICEEICT), IEEE, 21 May 2015
(2015-05-21), pages 1 - 6, XP032801742, DOI:
10.1109/ICEEICT.2015.7307482

**Description**

**TECHNICAL FIELD**

The disclosure relates to synchronization of sensitive information between multiple network nodes that are mutually coupled together via a data communication network; more particularly, the disclosure relates to network nodes that are mutually coupled together via server nodes, wherein the network nodes are configured to synchronize sensitive information therebetween without employing special hardware to ensure data security. Moreover, the disclosure relates to a method for operating the network nodes and the server nodes to synchronize sensitive information between the network nodes.

**BACKGROUND**

For data security reasons, it is often necessary to control access to data in a computing environment, for example for protecting against unauthorized access to the data and for preventing corruption of the data. Legal obligations require client data to be kept safe and secure, to prevent leakage and corruption of the client data, wherein such security is conventionally achieved by using data encryption, hashing, tokenization, and key management practices across applications and platforms that are client-accessible.

In a contemporary client-cloud scenario, when sensitive information is uploaded in plaintext without any data security being utilized, the cloud can easily obtain the sensitive information. In other words, the sensitive information potentially becomes leaked to the cloud.

For achieving data security in a client-cloud scenario, known data communication systems utilize a hardware security module (HSM) or software guard extensions (SGX) for performing various cryptographic operations such as key management, key exchange, encryption, and so forth. For example, the cloud uses the HSM or the SGX to synchronize the sensitive information uploaded by a given client device and ensures that the sensitive information uploaded by the given client device, including the cloud itself, is not exposed to an attacker. In the client-cloud scenario, there is no interactive communication between client devices. During encryption, a high-security key is generated using device hardware, and this high-security key cannot be synchronized to other devices due to a lack of interaction between devices. If the high-security key is lost, the sensitive information cannot be decrypted by other devices, causing a data loss to occur. Hence, the existing HSM or SGX for data security may cause data loss if the security key is lost. Furthermore, known types of data security systems are often difficult to deploy and are potentially very costly.

According to Document 1, a mobile data owner is configured to be coupled in communication via a cloud service with other network nodes, wherein the mobile data owner is configured to register itself to the cloud service and thereafter to synchronize itself to other network nodes in communication with the cloud service. The mobile users obtain the encrypted encryption key from the private cloud upon request, and the private cloud verifies the request and generates the key for encrypting the encryption key.

Document 1: PARK JAEMIN ET AL: Advanced Attribute-Based Key Management for Mobile Devices in Hybrid Clouds, 24 August 2015, XP032795296.

Therefore, there arises a need to address the aforementioned technical drawbacks in existing technologies used for synchronizing sensitive information between network nodes.

**SUMMARY**

It is an object of the disclosure to provide an improved approach to synchronize sensitive information (m) among network nodes coupled in communication with a cloud service, without using special hardware components to ensure data security.

This object is achieved by features of the independent claims. Further implementation forms are apparent from the dependent claims, the description, and the figures.

The disclosure provides network nodes and server nodes and a method for operating the network nodes and the server nodes to synchronize sensitive information (m) between the network nodes coupled in communication with a cloud service including the server nodes.

According to a first aspect, there is provided a first network node (client-device-1) that is configured to be coupled in communication via a cloud service with other network nodes. The cloud service includes one or more server nodes. The one or more server nodes are configured to communicate sensitive information (m). The first network node (client-device-1) is configured to register itself to the cloud service and thereafter to synchronize itself to the other network nodes (client-device-j) in communication with the cloud service. The first network node (client-device-1) is configured to generate a string (si) that is transmitted to each of the one or more server nodes and to receive a response from each of the one or more server nodes, wherein the response is a function of the string (si) and a sub-key (Ki) allocated to each of the one or more server nodes server node. The first network node (client-device-1) is configured to generate a password (PW) for the other network nodes to use to access the sensitive information (m). The first network node (client-device-1) is configured to instruct the one or more server nodes to send the string (si) to the other network nodes, for the other network nodes to use the password (PW) and the string (si) as confirmation responses back to the one or more server nodes. The first network node (client-device-1) is configured to instruct the one or more server nodes to process the confirmation responses to generate a corresponding response from which the other network nodes (client-device-j) are able to derive a root key (RK) for decrypting the sensitive information (m) at the other network nodes (client-device-j). The password (PW) is used to synchronize the sensitive information (m) of the first network node (client-device-1) to the other network nodes (client-device-j). The root key (RK) is useable to perform an authentication of the other network nodes (client-device-j) with at least one of the one or more server nodes, whereafter the sensitive information (m) is transmitted from the at least one of the one or more server nodes to the other network nodes (client-device-j) to be decrypted to provide the sensitive information (m).

The first network node (client-device-1) communicates the sensitive information (m) to the other network nodes (client-device-j) in communication with the cloud service without any special hardware components being needed to ensure the security of the sensitive information (m). The first network node (client-device-1) validates the security of the one or more server nodes using the string (si). Once the security of the one or more server nodes is validated, the first network node (client-device-1) is able to communicate the root key (RK) to the other network nodes via the one or more server nodes for decrypting the sensitive information (m). Such an establishment of security among the one or more server nodes and the other network nodes and the synchronization of the sensitive information (m) occurs without a need to use any special hardware components to ensure security. The first network node (client-device-1) enables the sensitive information (m) to be kept secure without a need to use special hardware components to ensure security.

In a first possible implementation form of the first network node (client-device-1) of the first aspect, the one or more server nodes have distributed thereto a series of sub-keys (Ki) generated from a secret key (K). A given server node of the one or more server nodes of the cloud service is unable to regenerate the secret key (K) solely from the knowledge of their corresponding sub-key (Ki). The sub-keys (Ki) are allocated to each of the one or more server nodes to use when processing the string (si) that is received from the first network node (client-device-1), to ensure trustworthiness of the one or more server nodes.

In a second possible implementation form of the first network node (client-device-1) of the first aspect, the first network node (client-device-1) is configured to arrange for the other network nodes (client-device-j) during the authentication to exchange one or more tasks (Challenge 1, Challenge2) with at least one of the one or more server nodes for authentication purposes. The authentication of the other network nodes at the one or more server nodes is beneficially achieved by exchanging the one or more tasks (Challenge1, Challenge2). Such an authentication enhances data security.

In a third possible implementation form of the first network node (client-device-1) of the second possible implementation of the first aspect, the first network node (client-device-1) is configured to set a threshold number of tasks to be attempted by the other network nodes (client-device-j) for confirming the authentication. The first network node (client-device-1) prevents hacking into the cloud service by malicious third parties which are trying to test the cloud service by setting the threshold number of tasks to be attempted by the other network nodes (client-device-j) for the authentication.

According to a second aspect, there is provided a method for operating a first network node (client-device-1) that is configured to be coupled in communication via a cloud service including one or more server nodes. The one or more server nodes are configured to communicate sensitive information (m). The method includes configuring the first network node (client-device-1) to register itself to the cloud service and thereafter to synchronize itself to other network nodes (client-device-j) in communication with the cloud service. The method includes configuring the first network node (client-device-1) to generate a string (si) that is transmitted to each of the one or more server nodes and to receive a response from each of the one or more server nodes, the response is a function of the string (si) and a sub-key (Ki) allocated to each of the one or more server nodes. The method includes configuring the first network node (client-device-1) to synchronize the sensitive information (m) to the other network nodes (client-device-j) by generating a password (PW) for the other network nodes (client-device-j) to use to access the sensitive information (m). The method includes configuring the first network node (client-device-1) to use the one or more server nodes to send the string (si) to the other network nodes (client-device-j), for the other network nodes (client-device-j) to use the password (PW) and the string (si) as confirmation responses back to the one or more server nodes. The method further includes configuring the first network node (client-device-1) to instruct the one or more server nodes to process the confirmation responses to generate a corresponding response from which the other network nodes (client-device-j) are able to derive a root key (RK). The root key (RK) is useable for decrypting the sensitive information (m) at the other network nodes (client-device-j) and for performing an authentication of the other network nodes (client-device-j) with at least one of the one or more server nodes, whereafter the sensitive information (m) is transmitted from the at least one of the server node to the other network nodes (client-device-j) to be decrypted threat (client-device-j) to provide the sensitive information (m) in decrypted form.

The method for operating the first network node (client-device-1) synchronizes the sensitive information (m) with the other network nodes (client-device-j) in communication with the cloud service without any special hardware components being needed to ensure the security of the sensitive information (m). The method for operating the first network node (client-device-1) uses the string (si) for authenticating the one or more server nodes. Then, the other network nodes (client-device-j) receive the encrypted sensitive information (m) through the one or more server nodes after the other network nodes authenticated with the one or more server nodes using the root key. The method for operating the first network node (client-device-1) enables the sensitive information (m) to be kept secure without a need to involve special hardware components to ensure security.

In a first possible implementation form of the method of the second aspect, the method includes distributing to the one or more server nodes a series of sub-keys (Ki) generated from a secret key (K). A given server node of the one or more server nodes of the cloud service is unable to regenerate the secret key (K) solely from the knowledge of their corresponding sub-key (Ki). The method for operating the first network node (client-device-1) includes allocating the sub-keys (Ki) to each of the one or more server nodes to use when processing the string (si) sent from the first network node (client-device-1), to ensure trustworthiness of the one or more server nodes.

In a second possible implementation form of the method of first possible implementation form of the second aspect, the method includes configuring the first network node (client-device-1) to arrange for the other network nodes (client-device-j) during authentication to exchange one or more tasks (Challenge1, Challenge2) with at least one of the one or more server nodes for authentication purposes. The exchange of the one or more tasks (Challenge1, Challenge2) is performed during the authentication of the other network nodes at the one or more server nodes to ensure data security.

In a third possible implementation form of the method of the second aspect, the method includes configuring the first network node (client-device-1) to set a threshold number of tasks to be attempted by the other network nodes (client-device-j) for confirming the authentication. The first network node (client-device-1) sets the threshold number of tasks, to be attempted by the other network nodes (client-device-j) for the authentication to prevent hacking of the cloud service by malicious hacking applications.

According to a third aspect, there is provided a server node of a cloud service that is configured to be coupled in communication with a first network node (client-device-1). The server node is configured to communicate sensitive information (m). The server node is configured to receive a request from the first network node (client-device-1) to register the first network node (client-device-1) to the cloud service and thereafter to synchronize the first network node (client-device-1) to other network nodes (client-device-j) coupled in communication with the cloud service. The server node is configured to receive a string (si) generated by the first network node (client-device-1) that is transmitted to each of one or more server nodes, wherein the each of one or more server nodes is configured to send a response to the first network node (client-device-1) that is a function of the string (si) and a sub-key (Ki) allocated to each of one or more server nodes. The server node is configured to synchronize the sensitive information (m) from the first network node (client-device-1) to the other network nodes (client-device-j) by communicating a password (PW) generated by the first network node (client-device-1) for the other network nodes (client-device-j). The server node is configured to receive an instruction from the first network node (client-device-1) to use the one or more server nodes of the cloud service to send the string (si) to the other network nodes (client-device-j), for the other network nodes (client-device-j) to use the password (PW) and the string (si) when sending confirmation responses back to the one or more server nodes. The server node is configured to receive instructions from the first network node (client-device-1) to configure the cloud service to process the confirmation responses to generate a corresponding response from which the other network nodes are able to derive a root key (RK). The root key (RK) is used to decrypt the sensitive data information (m) at the other network nodes (client-device-j) and to perform authentication with at least one of the server nodes, whereafter the sensitive information (m) is transmitted from the at least one of the server nodes to the other network nodes (client-device-j) to be decrypted thereat (client-device-j) to provide the sensitive information (m) in decrypted form.

The one or more server nodes are authenticated by the first network node (client-device-1) using the string (si). The one or more server nodes authenticate the other network nodes using the root key(RK), thereafter transmit the sensitive information (m) to the other network nodes. The advantage is that the authentication of the one or more server nodes and the other network nodes and synchronization of the sensitive information (m) occurs without a need for any special hardware components to be used to ensure data security. Thereby, the first network node (client-device-1) enables the sensitive information (m) to be communicated securely without a need to use any special hardware components.

In a first possible implementation form of the server node of the third aspect, the one or more server nodes of the cloud service have distributed thereto a series of sub-keys (Ki) generated from a secret key (K). A given server node of the one or more server nodes of the cloud service is unable to generate the secret (K) solely from its corresponding sub-key (Ki). The one or more server nodes have distributed thereto the sub-keys (Ki) to ensure a credibility of the one or more server nodes.

In a second possible implementation form of the server node of the third aspect, the server node is configured to receive instructions from the first network node (client-device-1) to arrange for the other network nodes (client-device-j) during the authentication to exchange one or more tasks (Challenge1, Challenge2) with at least one of server node for authentication purposes. To improve data security among the network nodes, the one or more server nodes authenticate the other network nodes by exchanging the one or more tasks (Challenge1, Challenge2) therebetween.

According to a fourth aspect, there is provided a method for operating a server node of a cloud service that configured to be coupled in communication with a first network node (client-device-1). The server node is configured to communicate sensitive information (m). The method includes configuring the server node to receive a request from the first network node (client-device-1) to register the first network node (client-device-1) to the cloud service and thereafter to synchronize the first network node (client-device-1) to other network nodes (client-device-j) in communication with the cloud service. The method includes configuring the server node to receive a string (si) generated by the first network node (client-device-1) that is transmitted to each of one or more server nodes, and to receive from each of the one or more server nodes a response that is a function of the string (si) and a sub-key (Ki) allocated to each of the one or more server nodes. The method includes configuring the server node to synchronize the sensitive information (m) from the first network node (client-device-1) to the other network nodes (client-device-j) by transmitting a password (PW) generated by the first network node (client-device-1) for the other network nodes (client-device-j) to use when accessing the sensitive information (m). The method includes configuring the server node to receive an instruction from the first network node (client-device-1) to use the one or more server nodes of the cloud service to send the string (si) to the other network nodes (client-device-j), for the other network nodes (client-device-j) to use the password (PW) and the string (si) as confirmation responses back to the one or more server nodes. The method includes configuring the server node to receive instructions from the first network node (client-device-1) to configure the cloud service to process the confirmation responses to generate a corresponding response from which the other network nodes (client-device-j) are able to derive a root key (RK). The root key (RK) is useable for decrypting the sensitive information (m) at the other network nodes (client-device-j). The root key (RK) is further useable to perform an authentication with at least one of the server nodes, whereafter the sensitive information (m) is communicated from the at least one of the one or more server nodes to the other network nodes (client-device-j) to be decrypted threat (client-device-j) to provide the sensitive information (m) in decrypted form.

The method for operating the server node includes authenticating the other network nodes (client-device-j) using the root key (RK), and thereafter transmitting the sensitive information (m) to the other network nodes. The advantage is that the method for operating the server node enables data security to be achieved without a need for any special hardware components to be used.

In a first possible implementation form of the method for operating the server node of the fourth aspect, the method includes distributing to the one or more server nodes a series of sub-keys (Ki) generated from a secret key (K). A given server node of the cloud service is unable to generate the secret (K) solely from its corresponding sub-key (Ki). The sub-keys (Ki) are allocated to each of the one or more server nodes to ensure trustworthiness of the one or more server nodes.

In a second possible implementation form of the method for operating the server node of the fourth aspect, the method includes configuring the server node to receive instructions from the first network node (client-device-1) to arrange for the other network nodes (client-device-j) during the authentication to exchange one or more tasks (Challenge1, Challenge2) with at least one of the server nodes for authentication purposes. The exchange of the one or more tasks (Challenge1, Challenge2) is performed during the authentication of the other network nodes at the one or more server nodes to improve the data security among the network nodes.

In a third possible implementation form of the method for operating the server node of the fourth aspect, the method includes configuring the server node to set a threshold number of tasks to be attempted by the other network nodes (client-device-j) for confirming the authentication. The threshold number of tasks to be attempted by the other network nodes is set by the server node for authorization of the other network nodes (client-device-j). This prevents hacking of the cloud service by malicious hacking applications.

According to a fifth aspect, there is provided a second network node (client-device-j) that is configured to be coupled in communication with a cloud service including one or more server nodes. The second network node (client-device-j) is configured to receive sensitive information (m) communicated from the one or more server nodes. The second network node (client-device-j) is configured to synchronize to a first network node (client-device-1) after the first network node (client-device-1) is registered to the cloud service. The first network node (client-device-1) is configured to generate a string (si) that is transmitted to each of the one or more server nodes. Each of the one or more server nodes is arranged to respond by generating a response that is a function of the string (si) and a sub-key (Ki) allocated to each of the one or more server nodes. The second network node (client-device-j) is configured to receive a password (PW) generated by the first network node (client-device-1) for the second network node (client-device-j) to use to access the sensitive information (m). The second network node (client-device-j) is configured to receive a string (si) as arranged by the first network node (client-device-1) instructing the one or more server nodes to send the string (si) to the second network node (client-device-j), for the second network node (client-device-j) to use the password (PW) and the string (si) as responses transmitted back to the one or more server nodes. The second network node (client-device-j) is configured to receive a response generated by the one or more server nodes processing the responses received from the second network node and to generate a corresponding response from which the second network node (client-device-j) is able to derive a root key (RK). The password (PW) is used to synchronize the sensitive information (m) to the second network node (client-device-j). The root key (RK) is used to decrypt the sensitive information (m) at the second network node (client-device-j). The root key (RK) is useable to perform an authentication with at least one of the one or more server nodes, whereafter the sensitive information (m) is received from the at least one of the one or more server nodes to be decrypted threat (client-device-j) to provide the sensitive information (m) in decrypted form.

The second network node (client-device-j) is authenticated with the one or more server nodes using the root key (RK), thereby validation of the second network node (client-device-j) is established. The validation of the second network node (client-device-j) is established without a need to use any special hardware components to ensure security.

In a first possible implementation form of the second network node (client-device-j) of the fifth aspect, the one or more server nodes have distributed thereto a series of sub-keys (Ki) generated from a secret key (K). A given server node of the one or more server nodes of the cloud service is unable to regenerate the secret key (K) solely from the knowledge of their corresponding sub-key (Ki). The sub-keys (Ki) are allocated to each of the one or more server nodes to use when processing the string (si) that is received from the first network node (client-device-1), to ensure trustworthiness of the one or more server nodes.

In a second possible implementation form of the second network node (client-device-j) of the fifth aspect as such or the first possible implementation of the fifth aspect, the second network node (client-device-j) is configured during the authentication to exchange one or more tasks (Challenge1, Challenge2) with at least one of the one or more server nodes for authentication purposes. The exchange of the one or more tasks (Challenge1, Challenge2) is performed during the authentication of the other network nodes at the one or more server nodes to ensure data security.

In a third possible implementation form of the second network node (client-device-j) of the second possible implementation of the fifth aspect, a threshold number of tasks is defined by the first network node (client-device-1) to be attempted by the second network node (client-device-j) for confirming the authentication. The threshold number of tasks defined by the first network node (client-device-1) to be attempted by the second network node (client-device-j) during authentication to prevent hacking of the cloud service by malicious third parties which are trying to test the cloud service.

According to a sixth aspect, there is provided a method for operating a second network node (client-device-j) that is configured to be coupled in communication with a cloud service including one or more server nodes. The one or more server nodes are configured to communicate sensitive information (m) to the second network node (client-device-j). A first network node (client-device-1) is configured to register itself to the cloud service and thereafter to synchronize itself to the second network node (client-device-j) in communication with the cloud service. The first network node (client-device-1) is configured to generate a string (si) that is transmitted to each of the one or more server nodes. Each of the one or more server nodes is arranged to respond by generating a response that is a function of the string (si) and a sub-key (Ki) allocated to each of the one or more server nodes. The method includes configuring the second network node to receive a password (PW) generated by the first network node (client-device-1) for the second network node (client-device-j) to use to access the sensitive information (m), wherein the password (PW) is used to synchronize the sensitive information (m) to the second network node (client-device-j). The method includes configuring the second network node (client-device-j) to receive the string (si) as arranged by the first network node (client-device-1) instructing the one or more server nodes to send the string (si) to the second network node (client-device-j), for the second network node (client-device-j) to use the password (PW) and the string (si) as responses back to the one or more server nodes. The method includes configuring the second network node (client-device-j) to receive a response generated by the one or more server nodes processing the responses received from the second network node (client-device-j) and to generate a corresponding response from which the second network node (client-device-j) is able to derive a root key (RK). The root key (RK) is useable for decrypting the sensitive information (m) at the second network node (client-device-j) and for performing an authentication of the second network node (client-device-j) with at least one of the one or more server nodes, thereafter the sensitive information (m) is transmitted from the at least one of the one or more server nodes to the second network node (client-device-j) to be decrypted threat (client-device-j) to provide the sensitive information (m) in decrypted form.

The method for operating the second network node (client-device-j) derives the root key (RK) to use in authentication of the second network node (client-device-j) with at least one of the one or more server nodes. The authentication of the second network node is established without any special hardware components being required to ensure security. The method for operating the second network node (client-device-j) enables the sensitive information (m) to be kept secure without a need to involve any special hardware components to ensure security.

In a first possible implementation form of the method for operating the second network node (client-device-j) of the sixth aspect, the one or more server nodes have distributed thereto a series of sub-keys (Ki) generated a secret key (K). A given server node of the one or more server nodes of the cloud service is unable to regenerate the secret key (K) solely from the knowledge of their corresponding sub-key (Ki). The one or more server nodes are provided with the sub-keys (Ki) to use during the processing of the string (si) received from the first network node (client-device-1), to ensure trustworthiness of the one or more server nodes.

In a second possible implementation form of the method for operating the second network node of the sixth aspect, the method includes configuring the first network node (client-device-1) to arrange for the second network node (client-device-j) during the authentication to exchange one or more tasks (Challenge1, Challenge2) with at least one of the one or more server nodes for authentication purposes. The authentication of the second network node (client-device-j) at the one or more server nodes is easily achieved by exchanging one or more tasks (Challenge1, Challenge2). This authentication enhances data security.

In a third possible implementation form of the method for operating the second network node (client-device-j) of the second possible implementation of the sixth aspect, the first network node is configured to set a threshold number of tasks to be attempted by the second network node (client-device-j) for confirming the authentication. The first network node (client-device-1) prevents hacking into the cloud service by malicious third parties by setting the threshold number of tasks to be attempted by the second network node for authentication purposes.

According to a seventh aspect, there is provided a computer program product including a non-transitory computer-readable storage medium having computer-readable instructions stored thereon, the computer-readable instructions being executable by a computerized device including processing hardware to execute the method of any of the aspects or any of their possible implementations.

A technical problem in the prior art is resolved, wherein the technical problem concerns synchronizing the sensitive information among network nodes or client devices in a cloud service in a secure manner without using hardware to ensure data security.

Therefore, in contradistinction to prior art, according to the network nodes and the server nodes of the cloud service and the method of operating the network nodes and the server nodes provided in the disclosure, data owners are enabled to have control over encryption or anonymity of the sensitive information (e.g., personal information). Moreover, the cloud service processes the encrypted sensitive data and may not obtain the plaintext, thereby no leakage of data even the cloud service is manipulated by a hacker. Furthermore, the disclosure improves data security, i.e., the confidentiality of customer sensitive data (e.g. subscription permanent identifier (SUPI)) which is achieved through encryption without trusting the cloud. Additionally, the disclosure improves data security by preventing brute force attack, offline attack, crypto-analytic attack as the attempts to get authenticated in the cloud service are finite.

These and other aspects of the disclosure will be apparent from and the embodiment(s) described below.

BRIEF DESCRIPTION OF DRAWINGS

To illustrate the technical solutions in the embodiments of the disclosure or the prior art more clearly, the following briefly introduces the accompanying drawings required for describing the embodiments of the prior art. Apparently, the accompanying drawings in the following description show merely some embodiments of the disclosure, and a person of ordinary skill in the art may still derive other drawings from these accompanying drawings without creative efforts.

FIG. 1 is an illustration of a first network node, one or more server nodes of a cloud service, and other network nodes; these nodes are configured to interact to synchronize sensitive information (m) in accordance with an example of the disclosure;

FIGS. 2A and 2B are flow diagrams of a method for operating the first network node of FIG. 1 in accordance with an example of the disclosure;

FIG. 3 is an interaction diagram of a method for operating the first network node of FIG. 1 in accordance with an example of the disclosure;

FIGS. 4A and 4B are flow diagrams of a method for operating the server node of a cloud service of FIG. 1 in accordance with an example of the disclosure;

FIG. 5 is an interaction diagram of a method for operating the server node of a cloud service of FIG. 1 in accordance with an example of the disclosure;

FIGS. 6A and 6B are flow diagrams of a method for operating the second network node of FIG. 1 in accordance with an example of the disclosure;

FIG. 7 is an interaction diagram of a method for operating the second network node of FIG. 1 in accordance with an example of the disclosure; and

FIG. 8 is an illustration of a computing arrangement for use in implementing examples of the disclosure.

## DETAILED DESCRIPTION

Embodiments of the disclosure provide network nodes and server nodes and methods for operating the network nodes and the server nodes to synchronize sensitive information between network nodes in communication with a cloud service including the server nodes.

To make solutions of the disclosure more comprehensible for a person skilled in the art, the following embodiments of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the embodiments of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units, but may include other steps or units that are not expressly listed or that are inherent to such process, method, product, or device.

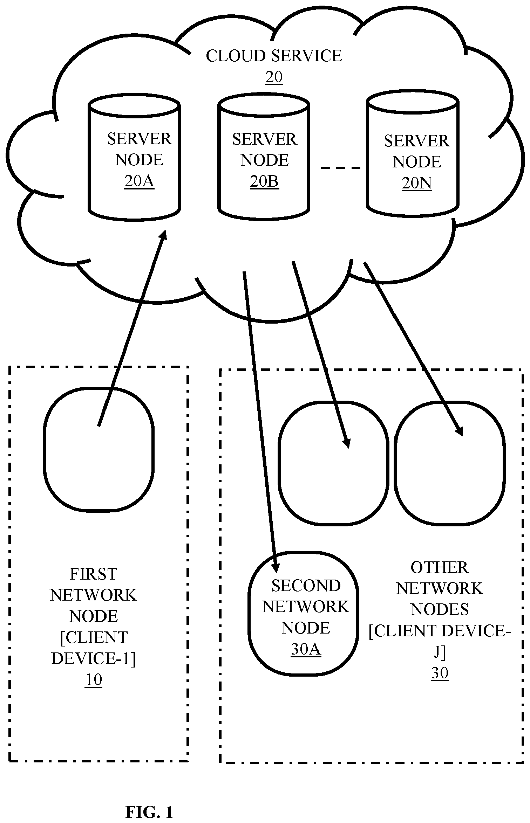

FIG. 1 is a block diagram that illustrates a first network node **10** (client-device-1), one or more server nodes **20A-N,** and other network nodes **30** (client-device-j); these nodes are configured to mutually interact to synchronize sensitive information (m) in accordance with an example of the disclosure. A cloud service **20** includes the one or more server nodes **20AN.** The first network node **10** (client-device-1) is configured to be coupled in communication via the cloud service **20** with other network nodes **30** (client-device-j). The one or more server nodes **20A-N** communicate the sensitive information (m) among the other network nodes **30** (client-device-j) through the cloud service **20** in a secure manner.

In overview, the first network node **10** (client-device-1) registers itself with the cloud service **20.** Thereafter, the first network node **10** (client-device-1) synchronizes itself to the other network nodes **30** (client-device-j) in communication with the cloud service **20.** Such registration and synchronization will next be described in detail.

The first network node **10** (client-device-1) generates a string (si) and transmits to each of the one or more server nodes **20A-N.** The first network node **10** (client-device-1) further receives a response from each of the one or more server nodes **20A-N.** The response is a function of the string (si) and a sub-key (Ki) allocated to each of the one or more server nodes **20A-N.** The first network node **10** (client-device-1) generates a password (PW) for the other network nodes **30** (client-device-j) for accessing the sensitive information (m). The password (PW) is used to synchronize the sensitive information (m) to the other network nodes **30** (client-device-j). The first network node **10** (client-device-1) instructs the one or more server nodes **20A-N** to send the string (si) to the other network nodes **30** (client-device-j), for the other network nodes **30** (client-device-j) to use the password (PW) and the string (si) as confirmation responses back to the one or more server nodes **20A-N.** The first network node **10** (client-device-1) instructs the one or more server nodes **20A-N** to process the confirmation responses to generate a corresponding response from which the other network nodes **30** (client-device-j) are able to derive a root key (RK) for decrypting the sensitive information (m) at the other network nodes **30** (client-device-j) from the corresponding response of the one or more server nodes **20A-N.** The root key (RK) is useable to perform an authentication of the other network nodes **30** (client-device-j) with at least one of the one or more server nodes **20A-N.** The sensitive information (m) may be encrypted at the at least one of the one or more server nodes **20A-N** and communicated to the other network nodes **30** (client-device-j). The sensitive information (m) is transmitted from the at least one of the one or more server nodes **20A-N** to the other network nodes **30** (client-device-j) to be decrypted.

In an embodiment, the first network node **10** (client-device-1) and the other network nodes **30** (client-device-j) may be user equipment or client devices.

The sensitive information (m) is data that may be guarded against unauthorized access and unwarranted disclosure to maintain the security of the sensitive information (m); for example, the sensitive information (m) belongs to an individual or an organization. The string (si) may be a data type that includes a set of characters and spaces and numbers. The root key (RK) may be a term for a unique passcode that may be generated for secure server interaction with a protective network.

According to a first embodiment, the one or more server nodes **20A-N** have distributed thereto a series of sub-keys (Ki) generated from a secret key (K). A given server node of the one or more server nodes **20A-N** of the cloud service **20** is unable to generate the secret (K) solely from its corresponding sub-key (Ki). The subkey (Ki) may be used for signing or for encryption. The secret key (K) may be divided into various parts, for example, sub-keys, K1, K2, K3, ...Ki.

According to a second embodiment, the first network node **10** (client-device-1) arranges for the other network nodes **30** (client-device-j) to exchange tasks (Challenge1, Challenge2) with the at least one of the one or more server nodes **20A-N** during authentication. The other network nodes **30** (client-device-j) optionally decrypt the sensitive information (m). Thus, the sensitive information (m) may be synchronized among the network nodes without a need to use special hardware for achieving data security. According to a third embodiment, the first network node **10** (client-device-1) is configured to set a threshold number of tasks to be attempted by the other network nodes **30** (client-device-j) for confirming the authentication.

The one or more server nodes **20A-N** of the cloud service **20** are configured to communicate the sensitive information (m) of the first network node **10** (client-device-1). The one or more server nodes **20A-N** are configured to be coupled to the first network node **10** (client-device-1). The one or more server nodes **20A-N** receive a request from the first network node **10** (client-device-1) to register the first network node **10** (client-device-1) to the cloud service **20** and thereafter to synchronize the first network node **10** (client-device-1) to the other network nodes **30** (client-device-j) coupled in communication with the cloud service **20**. The one or more server nodes **20A-N** receive the string (si) generated by the first network node **10** (client-device-1). The first network node **10** (client-device-1) sends the string (si) to each of the one or more server nodes **20A-N**. The one or more server nodes **20A-N** compute a response and send the response to the first network node **10** (client-device-1). The response is a function of the string (si) and a sub-key (Ki) allocated to each of the one or more server nodes **20A-N**. The one or more server nodes **20A-N** synchronize the sensitive information (m) from the first network node **10** (client-device-1) to the other network nodes **30** (client-device-j) by communicating a password (PW). The password (PW) is generated by the first network node **10** (client-device-1) for the other network nodes **30** (client-device-j) to use to access the sensitive information (m). The one or more server nodes **20A-N** receive an instruction from the first network node **10** (client-device-1). The instruction specifies the one or more server nodes **20A-N** to send the string (si) to the other network nodes **30** (client-device-j). The other network nodes **30** (client-device-j) use the password (PW) and the string (si) when sending confirmation responses back to the one or more server nodes **20A-N**. The one or more server nodes **20A-N** further receive instructions from the first network node **10** (client-device-1) to process the confirmation responses to generate a corresponding response. The other network nodes **30** (client-device-j) derive a root key (RK) from the corresponding response. The root key (RK) is useable for decrypting the sensitive information (m) at the other network nodes **30** (client-device-j). The root key (RK) is useable to perform authentication with at least one of the server nodes **20A**. The sensitive information (m) is transmitted from the at least one of the server nodes **20A-N** to the other network nodes **30** (client-device-j) to be decrypted threat (client-device-j) to provide the sensitive information (m) in decrypted form.

In an embodiment, the one or more server nodes **20A-N** of the cloud service **20** have distributed thereto a series of sub-keys (Ki) generated from a secret key (K). A given server node of the one or more server nodes **20A-N** of the cloud service **20** is unable to generate the secret (K) solely from its corresponding sub-key (Ki). The secret key (K) may be divided into various parts, for example, sub-keys, K1, K2, K3, ...Ki.

In an embodiment, the one or more server nodes **20A-N** are configured to receive instructions from the first network node **10** (client-device-1) to arrange for the other network nodes **30** (client-device-j) during the authentication to exchange one or more tasks (Challenge1, Challenge2) with at least one of the server nodes **20A** for authentication purposes.

The other network nodes **30** (client-device-j) include a second network node **30A**. The second network node **30A** is configured to obtain the sensitive information (m) of the first network node **10** (client-device-1) through the one or more server nodes **20A-N** of the cloud service **20** securely. The second network node **30A** (client-device-j) is coupled in communication with the cloud service **20**. The second network node **30A** receives the sensitive information (m) communicated from the one or more server nodes **20A-N**. The second network node **30A** is configured to synchronize to the first network node **10** (client-device-1) after the first network node **10** (client-device-1) is registered to the cloud service **20**. The first network node **10** (client-device-1) is configured to compute a string (si) and is transmitted to each of the one or more server nodes **20A-N**. Each of the one or more server nodes **20A-N** of the cloud service **20** generates a response that is a function of the string (si) and a sub-key (Ki) allocated to the one or more server nodes **20A-N**. The second network node **30A** is configured to receive a password (PW) generated by the first network node **10** (client-device-1). The second network node **30A** uses the password (PW) to access the sensitive information (m). The password (PW) is used to synchronize the sensitive information (m) to the second network node **30A**. The second network node **30A** is configured to receive a string (si) as arranged by the first network node **10** (client-device-1).

The first network node **10** (client-device-1) instructs the one or more server nodes **20A-N** to send the string (si) to the second network node **30A**. The second network node **30A** uses the password (PW) and the string (si) as responses transmitted back to the one or more server nodes **20A-N**. The second network node **30A** is configured to receive a response generated by the one or more server nodes **20A-N**. The one or more server nodes **20A-N** process the response received from the second network node **30A** and generate a corresponding response. The second network node **30A** computes a root key (RK) using the corresponding response. The root key (RK) is useable for decrypting the sensitive information (m) at the second network node **30A** (client-device-j). The root key (RK) is useable to perform an authentication of the second network node **30A** (client-device-j) with at least one of the one or more server nodes **20A-N.** The sensitive information (m) is received from the at least one of the one or more server nodes **20A-N** to be decrypted threat (client-device-j) to provide the sensitive information (m) in decrypted form.

In an embodiment, the one or more server nodes **20A-N** of the cloud service **20** have distributed thereto a series of sub-keys (Ki) generated from a secret key (K). A given server node of the one or more server nodes **20A-N** of the cloud service **20** is unable to generate the secret key (K) solely from its corresponding sub-key (Ki). Thus, the sensitive information (m) is synchronized within the network nodes without any special hardware being required for ensuring data security. The secret key (K) is divided into various parts, for example, sub-keys, K1, K2, K3, ...Ki.

In an embodiment, the second network node **30A** is configured during the authentication to exchange one or more tasks (Challenge1, Challenge2) with the at least one of the one or more server nodes **20A-N** for authentication purposes.

In an embodiment, a threshold number of tasks is defined by the first node **10** to be attempted by the other network nodes **30** (client-device-j) for confirming the authentication.

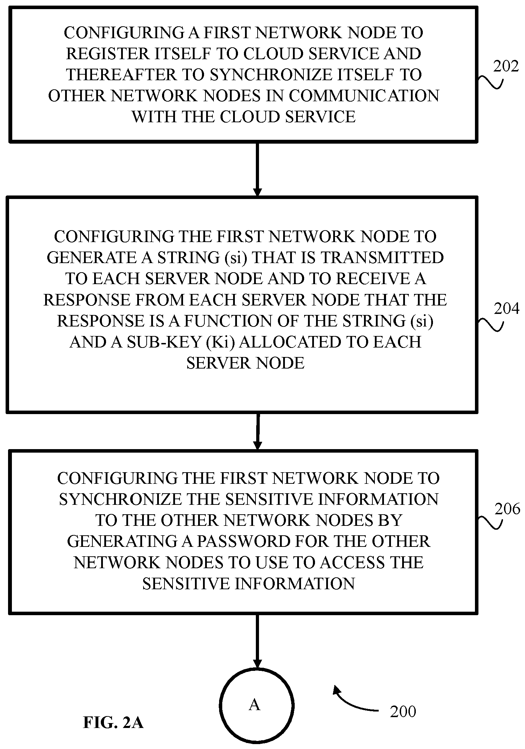

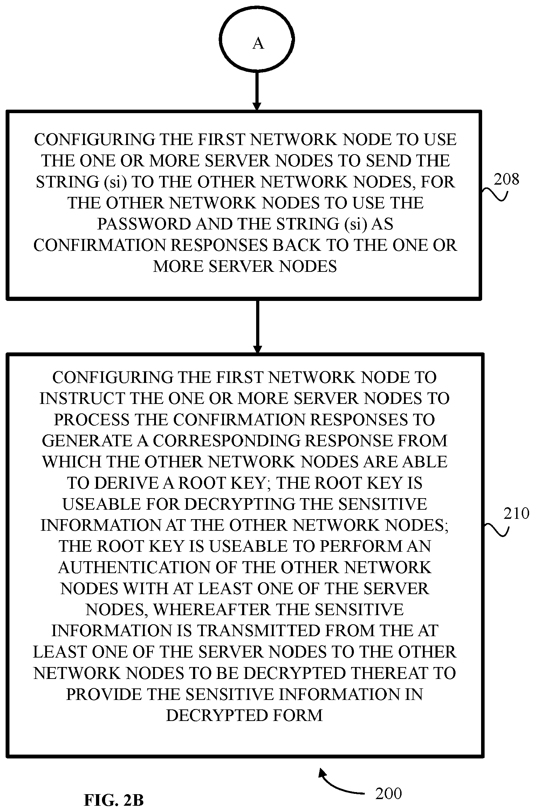

FIGS. 2A and 2B are flow diagrams of a method **200** for operating the first network node **10** (client-device-1) of FIG. 1 in accordance with an example of the disclosure. The first network node **10** (client-device-1) is configured to be coupled in communication with the cloud service **20.** At a step **202,** the first network node **10** is configured (client-device-1) to register itself to the cloud service **20** and thereafter to synchronize itself to other network nodes **30** (client-device-j) in communication with the cloud service **20.** At a step **204,** the first network node **10** (client-device-1) is configured to generate a string (si) that is transmitted to each of the one or more server nodes **20A-N.** The first network node **10** (client-device-1) is further configured to receive a response from each of the one or more server nodes **20A-N,** wherein the response is a function of the string (si) and a sub-key (Ki) allocated to each of the one or more server nodes **20A-N.** At a step **206,** the first network node **10** is configured to synchronize the sensitive information (m) to the other network nodes **30** (client-device-j) by generating a password (PW) for the other network nodes **30** (client-device-j) to use to access the sensitive information (m). At a step **208,** the first network node **10** is configured to use the one or more server nodes **20A-N** to send the string (si) to the other network nodes **30** (client-device-j), for the other network nodes **30** (client-device-j) to use the password (PW) and the string (si) as confirmation responses back to the one or more server nodes **20A-N.** At a step **210,** the first network node **10** is configured to instruct the one or more server nodes **20A-N** to process the confirmation responses to generate a corresponding response from which the other network nodes **30** (client-device-j) are able to derive a root key (RK). The root key (RK) is useable for decrypting the sensitive information (m) at the other network nodes **30** (client-device-j) and for performing an authentication of the other network nodes **30** (client-device-j) with at least one of the one or more server nodes **20A-N,** whereafter the sensitive information (m) is transmitted from the at least one of the one or more server nodes **20A-N** to the other network nodes **30** (client-device-j) to be decrypted threat to provide the sensitive information (m) in decrypted form.

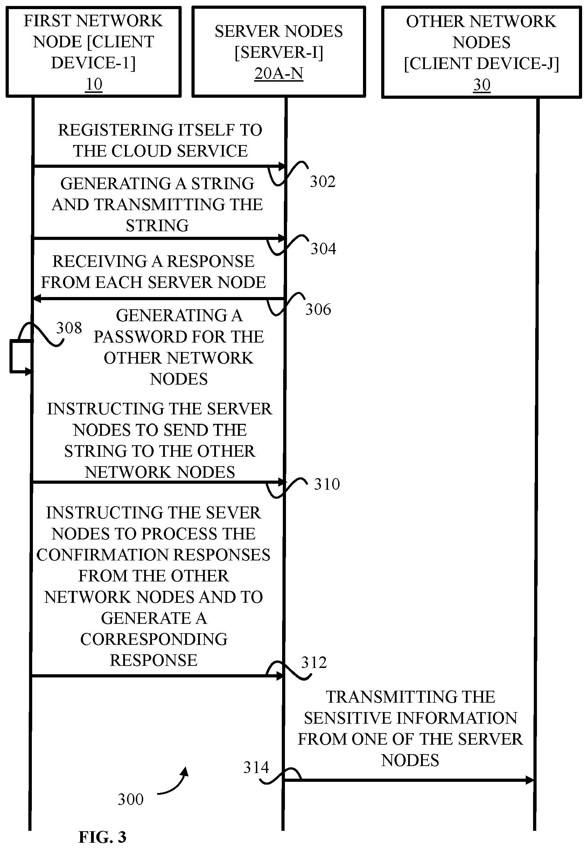

FIG. 3 is an interaction diagram of a method **300** for operating the first network node **10** (client-device-1) of FIG. 1 in accordance with an example of the disclosure. At a step **302,** the first network node **10** (client-device-1) is configured to register itself to the cloud service **20** and to synchronize to the other network nodes **30** (client-device-j) through the cloud service **20** by generating a string (si) at the first network node **10** (client-device-1) and transmitting the string (si) to each of the one or more server nodes **20A-N.** At a step **304,** the first network node **10** (client-device-1) is configured to receive a response by the first network node **10** (client-device-1) from each of the one or more server nodes **20A-N.** The response is a function of the string (si) and a sub-key allocated to each of the one or more server nodes **20A-N.** At a step **306,** the first network node **10** (client-device-1) is configured to generate a password (PW) for the other network nodes **30** (client-device-j). The password (PW) is used by the other network nodes **30** (client-device-j) to access the sensitive information (m) of the first network node **10** (client-device-1). At a step **308,** the first network node **10** (client-device-1) is configured to instruct, by the first network node **10** (client-device-1), the one or more server nodes **20A-N** to send the string (si) to the other network nodes **30** (client-device-j). At a step **310,** the first network node **10** (client-device-1) is configured to respond back as confirmation responses by the other network nodes **30** (client-device-j) to the one or more server nodes **20A-N** using the password (PW) and the string (si). At a step **312,** the first network node **10** (client-device-1) is configured to instruct, by the first network node **10** (client-device-1), the one or more server nodes **20A-N** to process the confirmation responses and generate a corresponding response to the other network nodes **30** (client-device-j) from which the other network nodes **30** (client-device-j) are able to derive a root key (RK) for authentication of the other network nodes **30** (client-device-j) with at least one of the server nodes **20A-N.** At a step **314,** the sensitive information (m) of the first network node **10** (client-device-1) is transmitted from the at least one of the one or more server nodes **20A-N** to the other network nodes **30** (client-device-j) to be decrypted after performing authentication of the other network nodes **30** (client-device-j). The root key (RK) is useable for decrypting the sensitive information (m) at the other network nodes **30** (client-device-j).

According to a first embodiment, the method **300** for operating the first network node **10** includes distributing to the one or more server nodes **20A-N** a series of sub-keys (Ki) generated from a secret key (K). A given server node of the one or more server nodes **20AN** of the cloud service **20** is unable to generate the secret (K) solely from its corresponding sub-key (Ki).

According to a second embodiment, the method **300** for operating the first network node **10** includes configuring the first network node **10** (client-device-1) to arrange for the other network nodes **30** (client-device-j) during the authentication to exchange one or more tasks (Challenge1, Challenge2) with at least one of the one or more server nodes **20A-N** for authentication purposes. According to a third embodiment, the method **300** for operating the first network node **10** includes configuring the first network node **10** (client-device-1) to set a threshold number of tasks to be attempted by the other network nodes **30** (client-device-j) for confirming the authentication.

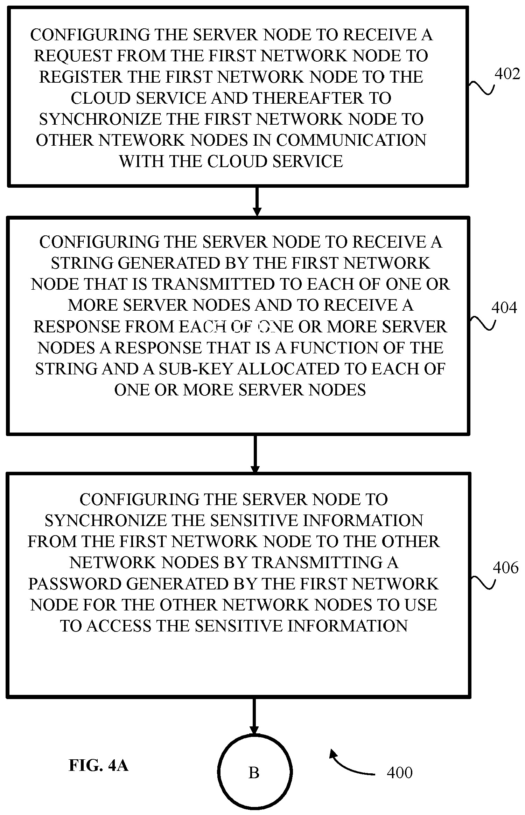

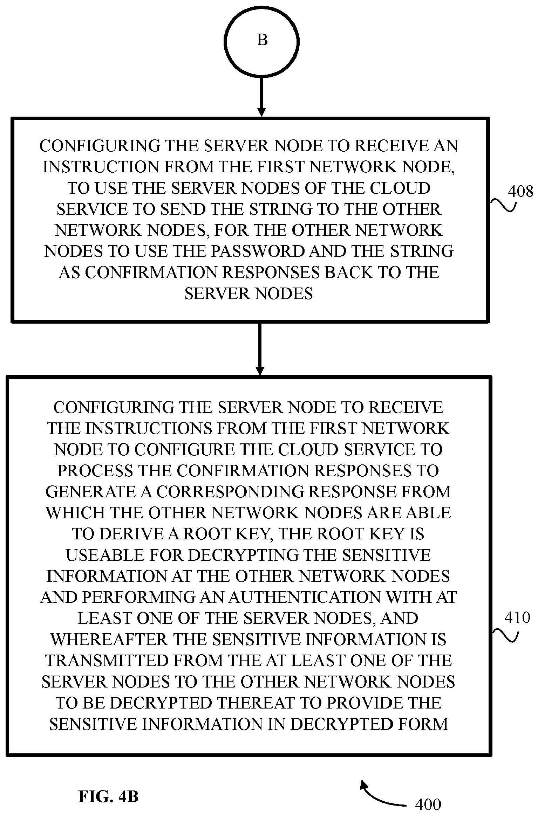

FIGS. 4A and 4B are flow diagrams of a method **400** for operating the server node **20A** of FIG. 1 in accordance with an example of the disclosure. The server node **20A** of the cloud service **20** is configured to be coupled in communication with the first network node **10** (client-device-1). At a step **402,** the server node **20A** is configured to receive a request from the first network node **10** (client-device-1) to register the first network node **10** (client-device-1) to the cloud service **20** and thereafter to synchronize the first network node **10** (client-device-1) to other network nodes **30** (client-device-j) in communication with the cloud service **20**. At a step **404,** the server node **20A** is configured to receive a string (si) generated by the first network node **10** (client-device-1) that is transmitted to each of one or more server nodes **20A-N,** and to receive from each of the one or more server nodes **20A-N** a response that is a function of the string (si) and a sub-key (Ki) allocated to each of the one or more server nodes **20A-N**. At a step **406,** the server node **20A** is configured to synchronize the sensitive information (m) from the first network node **10** (client-device-1) to the other network nodes **30** (client-device-j) by transmitting a password (PW) generated by the first network node **10** (client-device-1) for the other network nodes **30** (client-device-j) to use to access the sensitive information (m). At a step **408,** the server node **20A** is configured to receive an instruction from the first network node **10** (client-device-1), to use the one or more server nodes **20A-N** of the cloud service **20** to send the string (si) to the other network nodes **30** (client-device-j), for the other network nodes **30** (client-device-j) to use the password (PW) and the string (si) as confirmation responses back to the one or more server nodes **20A-N**. At a step **410,** the server node **20A** is configured to receive instructions from the first network node **10** (client-device-1) to configure the cloud service **20** to process the confirmation responses to generate a corresponding response from which the other network nodes **30** (client-device-j) are able to derive a root key (RK). The root key (RK) is useable for decrypting the sensitive information (m) at the other network nodes **30** (client-device-j) and for performing an authentication with at least one of the one or more server nodes **20AN;** thereafter, the sensitive information (m) is communicated from the at least one of the one or more server nodes **20A-N** to the other network nodes **30** (client-device-j) to be decrypted thereat (client-device-j) to provide the sensitive information (m) in decrypted form.

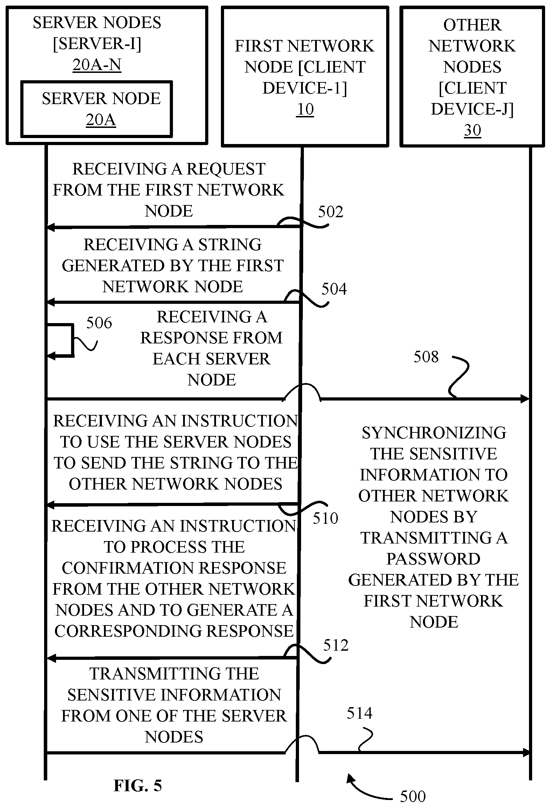

FIG. 5 is an interaction diagram of a method **500** for operating the server node **20A** of the cloud service **20** of FIG. 1 in accordance with an example of the disclosure. At a step **502,** the server node **20A** is configured to receive a request from the first network node **10** (client-device-1) to register the first network node **10** (client-device-1) to the cloud service **20** and thereafter to synchronize the first network node **10** (client-device-1) to the other network nodes **30** (client-device-j) in communication with the cloud service **20**. At a step **504,** the server node **20A** is configured to receive a string (si) generated by the first network node **10** (client-device-1) that is transmitted to each of the one or more server nodes **20A-N**. At a step **506,** the server node **20A** is configured to receive a response from each of the one or more server nodes **20A-N** that is a function of the string (si) and a sub-key (Ki) allocated to each of the one or more of server nodes **20A-N**. At a step **508,** the server node **20A** is configured to synchronize the sensitive information (m) from the first network node **10** (client-device-1) to the other network nodes **30** (client-device-j) by transmitting a password (PW) generated by the first network node **10** (client-device-1) for the other network nodes **30** (client-device-j) to use to access the sensitive information (m). At a step **510,** the server node **20A** is configured to receive an instruction from the first network node **10** (client-device-1) to use the one or more server nodes **20A-N** of the cloud service **20** to send the string (si) to the other network nodes **30** (client-device-j). The other network nodes (client-device-j) **30** use the password (PW) and the string (si) when sending confirmation responses back to the one or more server nodes **20A-N.** At a step **512,** the method **500** includes receiving, at the cloud service **20**, instructions from the first network node **10** (client-device-1) to process the confirmation responses to generate a corresponding response to the other network nodes **30** (client-device-j) from which the other network nodes **30** (client-device-j) are able to derive a root key (RK). At a step **514,** the server node **20A** is configured to transmit the sensitive information (m) of the first network node **10** (client-device-1) from at least one of the one or more server nodes **20A-N** to the other network nodes **30** (client-device-j) to be decrypted thereat (client-device-j) to provide the sensitive information (m) in decrypted form.

According to a first embodiment, the method **500** for operating the server node **20A** includes distributing to the one or more server nodes **20A-N** a series of sub-keys (Ki) generated from a secret key (K). A given server **20A** of the cloud service **20** is unable to generate the secret (K) solely from its corresponding sub-key (Ki).

According to a second embodiment, the method **500** for operating the server node **20A** includes configuring the server node **20A** to receive instructions from the first network node **10** (client-device-1) to arrange for the other network nodes **30** (client-device-j) during the authentication to exchange one or more tasks (Challenge 1, Challenge2) with at least one of the one or more server nodes **20A-N** for authentication purposes. According to a third embodiment, the method **500** for operating the server node **20A** includes configuring the server node **20A** to set a threshold number of tasks to be attempted for confirming authentication.

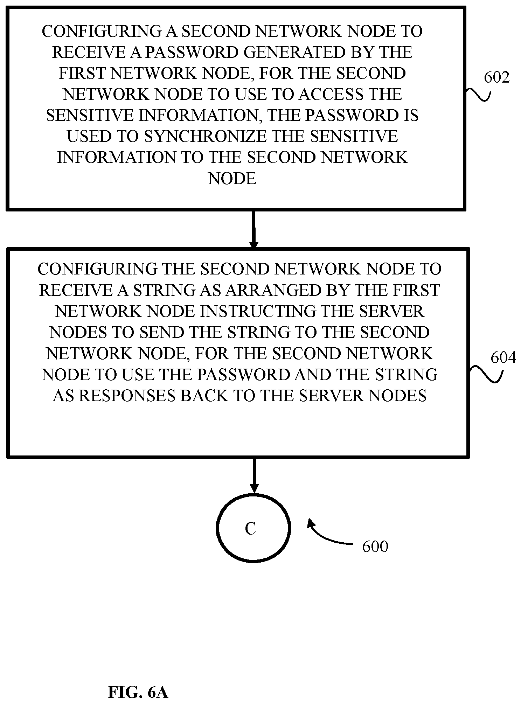

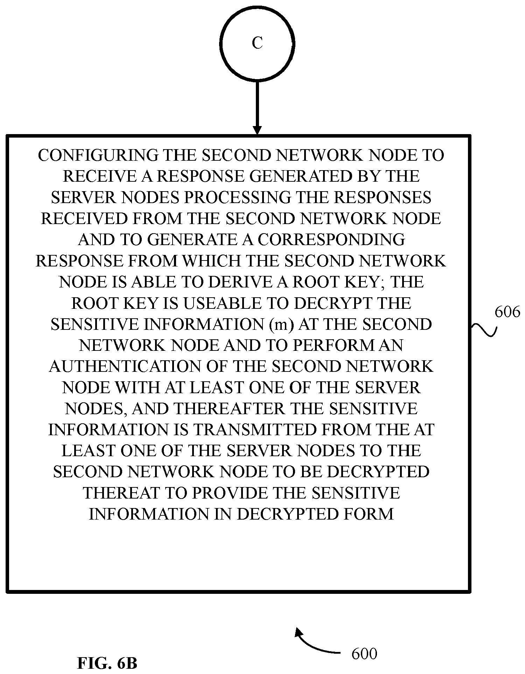

FIGS. 6A and 6B are flow diagrams of a method **600** for operating the second network node **30A** of FIG. 1 in accordance with an example of the disclosure. The second network node **30A** (client-device-j) is configured to be coupled in communication with the cloud service **20** including the one or more server nodes **20A-N.** The second network node **30A** (client-device-j) is configured to synchronize to the first network node **10** (client-device-1) after the first network node **10** (client-device-1) is registered to the cloud service **20.** The first network node **10** (client-device-1) is configured to compute a string (si) that is transmitted to each of the one or more server nodes **20A-N.** Each of the one or more server nodes **20A-N** of the cloud service **20** generates a response that is a function of the string (si) and a sub-key (Ki) allocated to the one or more server nodes **20A-N.** At a step **602,** the second network node **30A** (client-device-j) is configured to receive a password (PW) generated by the first network node **10** (client-device-1), for the second network node **30A** (client-device-j) to use to access the sensitive information (m), wherein the password (PW) is used to synchronize the sensitive information (m) to the second network node **30A** (client-device-j). At a step **604,** the second network node **30A** (client-device-j) is configured to receive the string (si) as arranged by the first network node **10** (client-device-1) instructing the one or more server nodes **20A-N** to send the string (si) to the second network node **30A** (client-device-j), for the second network node **30A** (client-device-j) to use the password (PW) and the string (si) as responses back to the one or more server nodes **20A-N.** At a step **606,** the second network node **30A** (client-device-j) is configured to receive a response generated by the one or more server nodes **20A-N** processing the responses received from the second network node **30A** (client-device-j) and to generate a corresponding response from which the second network node **30A** (client-device-j) is able to derive a root key (RK). The root key (RK) is useable for decrypting the sensitive information (m) at the second network node **30A** (client-device-j) and performing an authentication of the second network node **30A** (client-device-j) with at least one of the one or more server nodes **20A-N,** whereafter the sensitive information (m) is transmitted from the at least one of the one or more server nodes **20A-N** to the second network node **30A** (client-device-j) to be decrypted thereat to provide the sensitive information (m) in decrypted form.

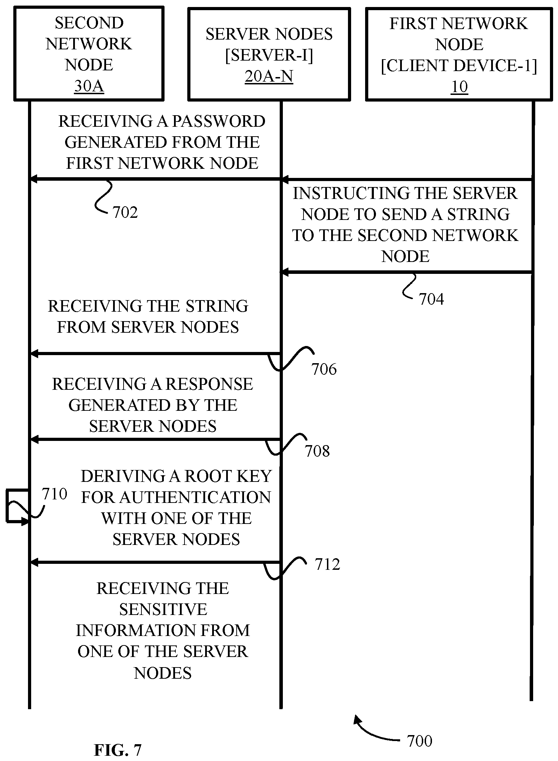

FIG. 7 is an interaction diagram of a method **700** for operating the second network node **30A** (client-device-j) of FIG. 1 in accordance with an example of the disclosure. The second network node **30A** (client-device-j) is configured to be coupled in communication with the cloud service **20** including the one or more server nodes **20A-N.** The second network node **30A** is configured to synchronize to the first network node **10** (client-device-1) after the first network node **10** (client-device-1) is registered to the cloud service **20.** At a step **702,** the second network node **30A** (client-device-j) is configured to receive a password generated by the first network node **10** (client-device-1) and is transmitted to each of the one or more server nodes **20A-N.** The password is used to synchronize the sensitive information (m) to the second network node **30A** (client-device-j). At a step **704,** the second network node **30A** (client-device-j) is configured to instruct, by the first network node **10** (client-device-1), the server nodes **20A-N** to send a string (si) to the second network node **30A** (client-device-j). At a step **706,** the second network node **30A** (client-device-j) is configured to receive the string (si) by the second network node **30A** (client-device-j) as arranged by the first network node **10** (client-device-1). The second network node **30A** (client-device-j) responds to the server nodes **20A-N** using the password (PW) and the string (si). At a step **708,** the second network node **30A** (client-device-j) is configured to receive a response by the second network node **30A** (client-device-j) from the server nodes **20A-N.** The second network node **30A** (client-device-j) processes the response by the server nodes **20A-N** and generates a response to the second network node **30A** (client-device-j). At a step **710,** the second network node **30A** (client-device-j) is configured to derive a root key (RK) for authentication of the second network node **30A** (client-device-j) with at least one of the server nodes **20AN.** At a step **712,** the second network node **30A** (client-device-j) is configured to receive the sensitive information (m) of the first network node **10** (client-device-1) from at least one of the server nodes **20A-N** to the second network node **30A** (client-device-j) to be decrypted.

According to a first embodiment, the one or more server nodes **20A-N** have distributed thereto a series of sub-keys (Ki) generated from a secret key (K). A given server node of the one or more server nodes **20A-N** of the cloud service **20** is unable to generate the secret (K) solely from its corresponding sub-key (Ki).

According to a second embodiment, the method **700** for operating the second network node **30A** includes configuring the first network node **10** (client-device-1) to arrange for the second network node **30A** (client-device-j) during the authentication to exchange one or more tasks (Challenge1, Challenge2) with at least one of the one or more server nodes **20AN** for authentication purposes. According to a third embodiment, the first network node **10** (client-device-1) is configured to set a threshold number of tasks to be attempted by the second network node **30A** for confirming the authentication.

In an embodiment, there is provided a system for communicating the sensitive information (m) among the network nodes through the cloud service **20.** The system includes a first network node **10** (client-device-1), one or more server nodes **20A-N** that provide the cloud service **20,** and other network nodes **30** (client-device-j). The other network nodes **30** include a second network node **30A.** The system (i) registers the first network node **10** (client-device-1) to the cloud service **20,** and (ii) synchronizes the first network node **10** (client-device-1) to the other network nodes **30** (client-device-j) in communication with the cloud service **20.** The system is configured to, for the registration and synchronization of the first network node **10** (client-device-1):

(i) generate a string (si) by the first network node **10** (client-device-1) and transmit by the first network node **10** (client-device-1) to each of the one or more server nodes **20A-N** of the cloud service **20;**

(ii) generate, at each of the one or more server nodes **20A-N,** a response as a function of the string (si) and a sub-key (Ki) allocated to each of the one or more server nodes **20A-N;**

(iii) receive, at the first network node **10** (client-device-1), the response from each of the one or more server nodes **20A-N;**

(iv) generate, at the first network node **10** (client-device-1), a password (PW) for the other network nodes **30** (client-device-j) to use to access the sensitive information (m);

(v) instruct, by the first network node **10** (client-device-1), the one or more server nodes **20A-N** to share the string (si) to the other network nodes **30** (client-device-j);

(vi) respond back with confirmation responses by the other network nodes **30** (client-device-j) to the one or more server nodes **20A-N** using the password (PW) and the string (si);

(vii) process the confirmation responses by the one or more server nodes **20A-N** to generate a corresponding response to the other network nodes **30** (client-device-j);

(viii) derive a root key (RK) by the other network nodes **30** (client-device-j) from the corresponding response for decrypting the sensitive information (m) at the other network nodes **30** (client-device-j);

(ix) authenticate the other network nodes **30** (client-device-j) with at least one of the server nodes **20A-N** using the root key (RK); and

(x) transmit the sensitive information (m) from the at least one of the one or more server nodes **20A-N** to the other network nodes **30** (client-device-j) to be decrypted thereat (client-device-j) to provide the sensitive information (m) in decrypted form.

According to another embodiment, there is provided a method for communicating the sensitive information (m) among the network nodes through the cloud service **20.** The method includes:

(i) registering the first network node **10** (client-device-1) to the cloud service **20,** and then synchronizing the first network node **10** (client-device-1) with the other network nodes **30** (client-device-j) in communication with the cloud service **20;**

(ii) generating a string (si) by the first network node **10** (client-device-1) and transmitting to each server node;

(iii) generating, at each of the one or more server nodes **20A-N,** a response as a function of the string (si) and a sub-key (Ki) allocated to each server node;

(iv) receiving the response from each of the one or more server nodes **20A-N;**

(v) generating, at the first network node **10** (client-device-1), a password (PW) for the other network nodes **30** (client-device-j) to use to access the sensitive information (m);

(vi) instructing, by the first network node **10** (client-device-1), the one or more server nodes **20A-N** to share the string (si) to the other network nodes **30** (client-device-j);

(vii) responding back with confirmation responses by the other network nodes **30** (client-device-j) to the one or more server nodes **20A-N** using the password (PW) and the string (si);

(viii) processing the confirmation responses by the one or more server nodes **20AN** to generate a corresponding response;

(ix) deriving a root key (RK) by the other network nodes **30** (client-device-j) from the corresponding response for decrypting the sensitive information (m) at the other network nodes **30** (client-device-j);

(x) authenticating the other network nodes **30** (client-device-j) with at least one of the one or more server nodes **20A-N** using the root key (RK); and

(xi) transmitting the sensitive information (m) from the at least one of the one or more server nodes **20A-N** to the other network nodes **30** (client-device-j) to be decrypted thereat (client-device-j) to provide the sensitive information (m) in decrypted form.

According to an embodiment, the registration of the first network node **10** (client-device-1) to the cloud service **20** is implemented as follows:

(i) the first network node **10** (client-device-1) generates a random string (si) and a random number (ri), and calculates:

$$Ai = H1(PW\|si)^{\wedge}(ri),\ i=1,\ ...,\ n$$

Then, the first network node **10** (client-device-1) sends Ai to the one or more server nodes **20A-N** in the cloud service **20;**

(ii) each of the one or more server nodes **20A-N,** generates a long term DH key: (public key: Yi=g^(yi), secret key: yi) and uses its own random sub-key (ki) for calculating Bi : Bi=Ai^(ki) ; Then, each of the one or more server nodes **20A-N** sends (Bi,Yi) to the first network node **10** (client-device-1);
(iii) The first network node **10** (client-device-1) computes:
Root key: RK = HKDF (H1(PW), (B1^(1/r1)\|... (Bn^(1/rn))) = HKDF (H1(PW), (H1(PW\|s1)^(k1) ... H1(PW\|sn)^(kn));

User generates random x, MasterKey: MK and computes:

$$X = g^{\wedge}(x);\ (longterm\ DH\ key)$$

$$C1 = AES\text{-}GCM(RK,\ x\|X\|Yi\|si);\ i=1,...,n$$

$$C2 = AES\text{-}GCM(RK,\ MK\|si);\ i=1,...,n$$

C3=AES-GCM(MK, m); m is sensitive data;
Finally, the first network node **10** (client-device-1) sends (si, X, C1, C2, C3, i=1,...,n) to the one or more server nodes **20A-N.**
Each of the one or more server nodes **20A-N** stores (si, X, C1, C2, C3, counter = MaxNumber) in its local data memory.
The registration and upload process are thereby completed.
According to an embodiment, the synchronization of the first network node **10** (client-device-1) with the other network nodes **30** (client-device-j) of the cloud service **20** is provided below.
A user of any of the other network nodes **30** (client-device-j) uses a screen-lock password to perform authentication and synchronization processes of the encrypted sensitive data (m) provided by the first network node **10** (client-device-1). The synchronization process is activated on the node side, for example by way of the username and password (PW) of the cloud service **20.** The synchronization includes,

1: After activating this service, the one or more server nodes **20A-N** send the string (si) to the other network nodes **30** (client-device-j), then counter = counter - 1;

2: User inputs the PW. Then, a software application ("app") on the other network nodes **30** chooses random r and computes: Ai = H1(si, PW)^r); Then, the other network nodes **30** sends Ai to the one or more server nodes **20A-N;**

3: The one or more server nodes **20A-N** compute Bi = $(A_i)$^(ki) and send (C1, Bi) to the other network nodes **30** (client-device-j);

4: The other network nodes **30** (client-device-j) compute:

$$RK = HKDF(H1(PW), (B1)^{\wedge}(1/r)\|\ldots(Bn)^{\wedge}(1/r));$$

Decryption : $x\|X\|Yi\|si$ = AES-GCM(RK,C1), i=1, ..., n; Verify the correctness of si if correct, then :

The other network nodes **30** use (x, X, Yi) to perform the authentication and decryption with the corresponding one or more server nodes **20A-N** ;

1. the other network nodes **30** (client-device-j) select random n1 and computes $N1=g^{\wedge}(n1)$, and send N1 to the one or more server nodes **20A-N.**
2. the one or more server nodes **20A-N** select random t1 and challenge1, and compute $T1=g^{\wedge}(t1)$, and send (T1, challenge1) to the other network nodes **30** (client-device-j).
3. the other network nodes **30** (client-device-j) compute master key and session keys:

$$ms = Yi^{\wedge}(x) + Yi^{\wedge}(n1) + T1^{\wedge}(x) + T1^{\wedge}(n1);$$

$$K_{MAC} = HKDF(ms, UID\|ServerID\|X\|Yi\|N1\|T1\|"MAC");$$

Authentication Message:

$$MAC1 = HMAC(K_{MAC},$$

$$Challenge1\|N1\|T1\|UID\|ServerID\|"Authentication")$$

$K_{ENC}$= HKDF(ms, UID$\|$ServerID$\|$X$\|$Yi$\|$N1$\|$T1$\|$"ENC"); $K_{Enc}$ as session encryption/decryption key;
the other network nodes **30** (client-device-j) generate a random Challenge2, and sends (MAC1, challenge2) to the one or more server nodes **20A-N.**

The one or more server nodes **20A-N** compute the same master key:

- $ms = X^{\wedge}(yi) + N1^{\wedge}(yi) + X^{\wedge}(t1) + N1^{\wedge}(t1);$

- $K_{MAC}$= HKDF(ms, UID$\|$ServerID$\|$X$\|$Yi$\|$N1$\|$T1$\|$"MAC");

- $K_{ENC}$= HKDF(ms, UID$\|$ServerID$\|$X$\|$Yi$\|$N1$\|$T1$\|$"ENC");

- Verify the Authentication Message MAC 1: first, computes MAC1' = HMAC($K_{MAC}$, challenge 1$\|$N1$\|$T1$\|$UID$\|$ServerID$\|$"Authentication"); then compare MAC1' and MAC1, if "=" and counter > 0, then accept. Otherwise, if counter > 0, then go to step 1 ; Else, reject, out of system;

If accepted, then compute : MAC2 = HMAC($K_{MAC}$,
[0088]  Challenge2$\|$N1$\|$T1$\|$UID$\|$ServerID$\|$"Authentication")

∘ Enc_C2 = AES-GCM($K_{ENC}$, C2 $\|$Challenge1 $\|$Challenge2);

∘ Enc_C3 = AES-GCM($K_{ENC}$, C2 $\|$Challenge1 $\|$Challenge2)

Finally, the one or more server nodes **20A-N** set the Counter = 0 and send (MAC2, ENC_C2, ENC_C3) to the other network nodes **30** (client-device-j);

2) The other network nodes **30** (client-device-j) verify the Authentication Message MAC2: first, computes MAC2' = HMAC($K_{MAC}$, challenge2$\|$N1$\|$T1$\|$UID$\|$ServerID$\|$"Authentication"); Then compare MAC2' and MAC2, if "=", accept.

3) If accept, then using $K_{ENC}$ and RK decrypts Enc_C2, Enc_C3:

- C2 = AES_GCM($K_{ENC}$, ENC_C2) ;

- C3 = AES_GCM($K_{ENC}$, ENC_C3) ;

- MK = AES_GCM(RK, C2) ;

- m = AES_GCM(MK, C3)

Finally, the other network nodes **30** (client-device-j) obtain the sensitive data (m) encrypted by the first network node **10** (client-device-1), the synchronization process is completed.

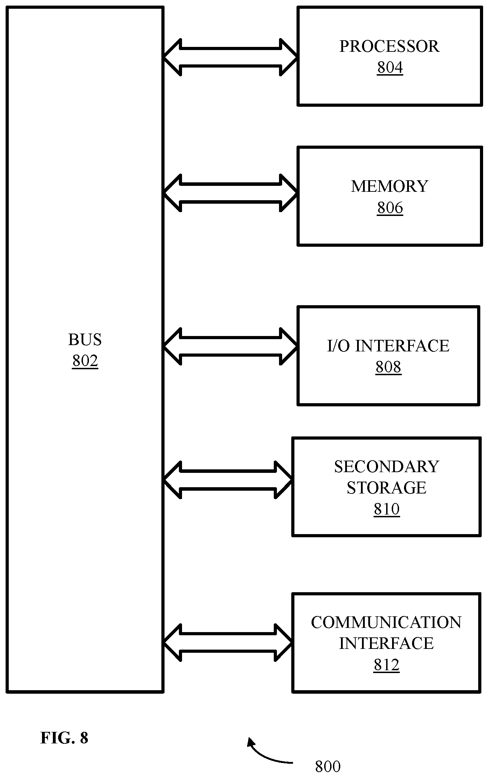

FIG. 8 is an illustration of an exemplary system **800** in which the various architectures and functionalities of the various previous examples may be implemented. As shown, the system **800** includes at least one processor **804** that is connected to a bus **802,** wherein the system **800** may be implemented using any suitable protocol, such as PCI (Peripheral Component Interconnect), PCI-Express, AGP (Accelerated Graphics Port), HyperTransport, or any other bus or point-to-point communication protocol (s). The system **800** also includes a data memory **806.**

Control logic (software) and data are stored in the data memory **806** which may take the form of random-access memory (RAM). In the description, a single semiconductor platform may refer to a sole unitary semiconductor-based integrated circuit or chip. It should be noted that the term single semiconductor platform may also refer to multi-chip modules with increased connectivity which simulate on-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The system **800** may also include a secondary storage **810.** The secondary storage **810** includes, for example, a hard disk drive and a removable storage drive, representing a floppy disk drive, a magnetic tape drive, a compact disk drive, digital versatile disk (DVD) drive, recording device, universal serial bus (USB) flash memory. The removable storage drive at least one of reads from and writes to a removable storage unit in a well-known manner.

Computer programs, or computer control logic algorithms, may be stored in at least one of the memory **806** and the secondary storage **810.** Such computer programs, when executed, enable the system **800** to perform various functions as described in the foregoing. The memory **806,** the secondary storage **810,** and any other storage are possible examples of computer-readable media.

In an embodiment, the architectures and functionalities depicted in the various previous figures may be implemented in the context of the processor **804,** a graphics processor coupled to a communication interface **812,** an integrated circuit (not shown) that is capable of at least a portion of the capabilities of both the processor **804** and a graphics processor, a chipset (i.e., a group of integrated circuits designed to work and sold as a unit for performing related functions, etc.).

Furthermore, the architectures and functionalities depicted in the various previous figures may be implemented in the context of a general computer system, a circuit board system, a game console system dedicated for entertainment purposes, an application-specific system. For example, the system **800** may take the form of a desktop computer, a laptop computer, a server, a workstation, a game console, an embedded system.

Furthermore, the system **800** may take the form of various other devices including, but not limited to a personal digital assistant (PDA) device, a mobile phone device, a smart phone, a television, etc. Additionally, although not shown, the system **800** may be coupled to a network (e.g., a telecommunications network, a local area network (LAN), a wireless network, a wide area network (WAN) such as the Internet, a peer-to-peer network, a cable network, or the like) for communication purposes through an I/O interface **808.**

It should be understood that the arrangement of components illustrated in the figures described are exemplary and that other arrangement may be possible. It should also be understood that the various system components (and means) defined by the claims, described below, and illustrated in the various block diagrams represent components in some systems configured according to the subject matter disclosed herein. For example, one or more of these system components (and means) may be realized, in whole or in part, by at least some of the components illustrated in the arrangements illustrated in the described figures.

In addition, while at least one of these components are implemented at least partially as an electronic hardware component, and therefore constitutes a machine, the other components may be implemented in software that when included in an execution environment constitutes a machine, hardware, or a combination of software and hardware.

**Claims**

1. A first network node (10) (client-device-1) that is configured to be coupled in communication via a cloud service (20) with other network nodes (client-device-j) (30), wherein the cloud service (20) includes a plurality of server nodes (20A-N), wherein the plurality of server nodes (20A-N) are configured to communicate sensitive information (m), wherein the first network node (10) is configured:

   (a) to register itself to the cloud service (20) and thereafter to synchronize itself to other network nodes (30) (client-device-j) in communication with the cloud service (20);
   (b) to generate a string (si) that the first network node (10) transmits to each of the plurality of server nodes (20A-N), wherein the first network node (10) is configured to receive a response from each of the plurality of server nodes (20A-N), wherein the response is a function of the string (si) and a sub-key (Ki) allocated to each of the plurality of server nodes (20A-N);
   (c) to generate a password (PW) for the other network nodes (30) (client-device-j) to use to access the sensitive information (m), wherein the password (PW) is configured to synchronize the sensitive information (m) to the other network nodes (30) (client-device-j);
   (d) to instruct the plurality of server nodes (20A-N) to send the string (si) to the other network nodes (30) (client-device-j), for the other network nodes (30) (client-device-j) to use the password (PW) and the string (si) as confirmation responses back to the plurality of server nodes (20A-N); and
   (e) to instruct the plurality of server nodes (20A-N) to process the confirmation responses to generate a corresponding response from which the other network nodes (30) (client-device-j) are configured to derive a root key (RK) for decrypting the sensitive information (m) at the other network nodes (30) (client-device-j), wherein the root key (RK) is configured to perform an authentication of the other network nodes (30) (client-device-j) with at least one of the plurality of server nodes (20A-N), whereafter the sensitive information (m) is transmitted from the at least one of the plurality of server nodes (20A-N) to the other network nodes (30) (client-device-j) to be decrypted to provide the sensitive information (m).

2. A first network node (10) (client-device-1) of claim 1, wherein the plurality of server nodes (20A-N) have distributed thereto a series of sub-keys (Ki) generated from a secret key (K), wherein a given server node of the plurality of server nodes (20A-N) of the cloud service (20) is unable to generate the secret key (K) solely from its corresponding sub-key (Ki).

3. A first network node (10) (client-device-1) of claim 1, wherein the first network node (10) (client-device-1) is configured to arrange for the other network nodes (30) (client-device-j) during the authentication to exchange one or more tasks (Challenge1, Challenge2) with at least one of the plurality of server nodes (20A-N) for authentication purposes.

4. A first network node (10) (client-device-1) of claim 3, wherein the first network node (10) (client-device-1) is configured to set a threshold number of tasks to be attempted by the other network nodes (30) (client-device-j) for confirming the authentication.

5. A method for operating a first network node (10) (client-device-1) that is configured to be coupled in communication with a cloud service (20) including a plurality of server nodes (20A-N), wherein the plurality of server nodes (20A-N) are configured to communicate sensitive information (m), wherein the method includes:

   (a) configuring the first network node (10) to register itself to the cloud service (20) and thereafter to synchronize itself to other network nodes (30) (client-device-j) in communication with the cloud service (20);
   (b) configuring the first network node (10) to generate a string (si) that is transmitted to each of the plurality of server nodes (20A-N), wherein the first network node (10) (client-device-1) is configured to receive a response from each of the plurality of server nodes (20A-N), wherein the response is a function of the string (si) and a sub-key (Ki) allocated to each of the plurality of server nodes (20A-N);
   (d) configuring the first network node (10) to synchronize the sensitive information (m) to the other network nodes (30) (client-device-j) by generating a password (PW) for the other network nodes (30) (client-device-j) to use to access the sensitive information (m);
   (e) configuring the first network node (10) to use the plurality of server nodes (20A-N) to send the string (si) to the other network nodes (30) (client-device-j), for the other network nodes (30) (client-device-j) to use the password (PW) and the string (si) as confirmation responses back to the plurality of server nodes (20A-N); and
   (f) configuring the first network node (10) to instruct the plurality of server nodes (20A-N) to process the confirmation responses to generate a corresponding response from which the other network nodes (30) (client-device-j) are configured to derive a root key (RK), wherein the root key (RK) is configured to decrypt the sensitive information (m) at the other network nodes (30)(client-device-j), wherein the root key (RK) is configured to perform an authentication of the other network nodes (30) (client-device-j) with at least one of the plurality of server nodes (20A-N), whereafter the sensitive information (m) is transmitted from the at least one of the plurality of server nodes (20A-N) to the other network nodes (30)(client-device-j) to be decrypted threat (client-device-j) to provide the sensitive information (m) in decrypted form.

6. A method of claim 5, wherein the method includes distributing to the plurality of server nodes (20A-N) a series of sub-keys (Ki) generated from a secret key (K), wherein a given server node of the plurality of server nodes (20A-N) of the cloud service (20) is unable to generate the secret key (K) solely from its corresponding sub-key (Ki).

7. A method of claim 6, wherein the method includes configuring the first network node (10) (client-device-1) to arrange for the other network nodes (30) (client-device-j) during the authentication to exchange one or more tasks (Challenge 1, Challenge2) with at least one of the plurality of server nodes (20A-N) for authentication purposes.

8. A method of claim 7, wherein the method includes configuring the first network node (10) (client-device-1) to set a threshold number of tasks to be attempted by the other network nodes (30) (client-device-j) for confirming the authentication.

9. A server node (20A) of a cloud service (20) that is configured to be coupled in communication with a first network node (10) (client-device-1), wherein the server node (20A) is configured to communicate sensitive information (m), wherein the server node (20A) is configured to:

(a) receive a request from the first network node (10) to register the first network node (10) to the cloud service (20) and thereafter to synchronize the first network node (10) to other network nodes (30) (client-device-j) coupled in communication with the cloud service (20);
(b) receive a string (si) generated by the first network node (10) that is transmitted to each of a plurality of server nodes (20A-N), wherein each of the plurality of server nodes (20A-N) is configured to send a response to the first network node (10) that is a function of the string (si) and a sub-key (Ki) allocated to each of the plurality of server nodes (20A-N);
(c) synchronize the sensitive information (m) from the first network node (10) to the other network nodes (30) (client-device-j) by communicating a password (PW) generated by the first network node (10) for the other network nodes (30) (client-device-j) to use to access the sensitive information (m);
(d) receive an instruction from the first network node (10) to use the plurality of server nodes (20A-N) of the cloud service (20) to send the string (si) to the other network nodes (30) (client-device-j), for the other network nodes (30) (client-device-j) to use the password (PW) and the string (si) when sending confirmation responses back to the plurality of server nodes (20A-N); and
(e) receive instructions from the first network node (10) to configure the cloud service (20) to process the confirmation responses to generate a corresponding response from which the other network nodes (30) (client-device-j) are configured to derive a root key (RK), wherein the root key (RK) is configured to decrypt the sensitive information (m) at the other network nodes (30) (client-device-j), wherein the root key (RK) is configured to perform an authentication with at least one of the plurality of server nodes (20A-N), whereafter the sensitive information (m) is communicated from the at least one of the plurality of server nodes (20A-N) to the other network nodes (30)(client-device-j) to be decrypted threat (client-device-j) to provide the sensitive information (m) in decrypted form.

10. A server node of claim 9, wherein the plurality of server nodes (20A-N) of the cloud service (20) have distributed thereto a series of sub-keys (Ki) generated from a secret key (K), wherein a given server node of the plurality of server nodes (20A-N) of the cloud service (20) is unable to generate the secret key (K) solely from its corresponding sub-key (Ki).

11. A server node (20A) of claim 9, wherein the server node (20A) is configured to receive instructions from the first network node (10) (client-device-1) to arrange for the other network nodes (30) (client-device-j) during the authentication to exchange one or more tasks (Challenge1, Challenge2) with at least one of the plurality of server nodes (20A-N) for authentication purposes.

12. A second network node (30A) (client-device-j) that is configured to be coupled in communication with a cloud service (20) including a plurality of server nodes (20A-N), wherein the second network node (30A) is configured to receive sensitive information (m) communicated from a plurality of server nodes (20A-N), wherein the second network node (30A) is configured to synchronize to a first network node (10) (client-device-1) after the first network node (10) is registered to the cloud service (20), wherein the first network node (10) is configured to generate a string (si) that is transmitted to each of the plurality of server node (20A-N), wherein each of the plurality of server node (20A-N) is arranged to respond by generating a response that is a function of the string (si) and a sub-key (Ki) allocated to each of the plurality of server nodes (20A-N); wherein

(a) the second network node (30A) is configured to receive a password (PW) generated by the first network node (10) for the second network node (30A) to use to access the sensitive information (m), wherein the password (PW) is configured to synchronize the sensitive information (m) to the second network node (30A);
(b) the second network node (30A) is configured to receive a string (si) as arranged by the first network node (10) instructing the plurality of server nodes (20A-N) to send the string (si) to the second network node (30A), for the second network node (30A) to use the password (PW) and the string (si) as responses transmitted back to the plurality of server nodes (20A-N); and
(c) the second network node (30A) is configured to receive a response generated by the plurality of server nodes (20A-N) processing the responses received from the second network node (30A) and to generate a corresponding response from which the second network node (30A) is configured to derive a root key (RK), wherein the root key (RK) is configured to decrypt the sensitive information (m) at the second network node (30A) (client-device-j), wherein the root key (RK) is configured to perform an authentication with at least one of the server nodes (20), whereafter the sensitive information (m) is received from the at least one of the plurality of server nodes (20A-N) to be decrypted (client-device-j) to provide the sensitive information (m) in decrypted form.

13. A second network node (30A) of claim 12, wherein the plurality of server nodes (20A-N) have distributed thereto a series of sub-keys (Ki) generated from a secret key (K), wherein a given server node of the plurality of server nodes (20A-N) of the cloud service (20) is unable to generate the secret key (K) solely from its corresponding sub-key (Ki).

14. A second network node (30A) (client-device-j) of claim 12 or 13, wherein the second network node (30A) (client-device-j) is configured during the authentication to exchange one or more tasks (Challenge1, Challenge2) with at least one of the plurality of server nodes (20A-N) for authentication purposes.

15. A second network node (30A) (client-device-j) of claim 14, wherein a threshold number of tasks is defined by the first node (10) to be attempted by the second network node (30A) for confirming the authentication.

**Patentansprüche**

1. Erster Netzwerkknoten (10) (Client-Vorrichtung-1), der dazu konfiguriert ist, über einen Cloud-Dienst (20) mit anderen Netzwerkknoten (Client-Vorrichtung-j) (30) kommunizierend gekoppelt zu werden, wobei der Cloud-Dienst (20) eine Vielzahl von Serverknoten (20A-N) enthält, wobei die Vielzahl von Serverknoten (20A-N) dazu konfiguriert sind, sensible Informationen (m) zu übermitteln, wobei der erste Netzwerkknoten (10) dazu konfiguriert ist:

(a) sich bei dem Cloud-Dienst (20) zu registrieren und sich danach mit anderen Netzwerkknoten (30) (Client-Vorrichtung-j) in Kommunikation mit dem Cloud-Dienst (20) zu synchronisieren;
(b) eine Zeichenkette (si) zu erzeugen, die der erste Netzwerkknoten (10) an jeden der Vielzahl von Serverknoten (20A-N) sendet, wobei der erste Netzwerkknoten (10) dazu konfiguriert ist, eine Antwort von jedem der Vielzahl von Serverknoten (20A-N) zu empfangen, wobei die Antwort von der Zeichenkette (si) und einem jedem der Vielzahl von Serverknoten (20A-N) zugewiesenen Unterschlüssel (Ki) abhängig ist;
(c) ein Passwort (PW) für die anderen Netzwerkknoten (30) (Client-Vorrichtung-j) zu erzeugen, das diese verwenden müssen, um auf die sensiblen Informationen (m) zuzugreifen, wobei das Passwort (PW) dazu konfiguriert ist, die sensiblen Informationen (m) mit den anderen Netzwerkknoten (30) (Client-Vorrichtung-j) zu synchronisieren;
(d) die Vielzahl von Serverknoten (20A-N) anzuweisen, die Zeichenkette (si) an die anderen Netzwerkknoten (30) (Client-Vorrichtung-j) zu senden, damit die anderen Netzwerkknoten (30) (Client-Vorrichtung-j) das Passwort (PW) und die Zeichenkette (si) als Bestätigungsantworten zurück an die Vielzahl von Serverknoten (20A-N) verwenden; und
(e) die Vielzahl von Serverknoten (20A-N) anzuweisen, die Bestätigungsantworten zu verarbeiten, um eine entsprechende Antwort zu erzeugen, aus der die anderen Netzwerkknoten (30) (Client-Vorrichtung-j) dazu konfiguriert sind, einen Stammschlüssel (RK) zum Entschlüsseln der sensiblen Informationen (m) auf den anderen Netzwerkknoten (30) (Client-Vorrichtung j) abzuleiten, wobei der Stammschlüssel (RK) dazu konfiguriert ist, eine Authentifizierung der anderen Netzwerkknoten (30) (Client-Vorrichtung-j) mit mindestens einem der Vielzahl von Serverknoten (20A-N) durchzuführen, woraufhin die sensiblen Informationen (m) aus dem mindestens einen der Vielzahl von Serverknoten (20A-N) an die anderen Netzwerkknoten (30) (Client-Vorrichtung-j) übertragen werden, um entschlüsselt zu werden, um die sensiblen Informationen (m) bereitzustellen.

2.  Erster Netzwerkknoten (10) (Client-Vorrichtung-1) gemäß Anspruch 1, wobei die Vielzahl von Serverknoten (20A-N) eine Reihe von Unterschlüsseln (Ki) darauf verteilt aufweisen, die aus einem geheimen Schlüssel (K) erzeugt wurden, wobei ein gegebener Serverknoten der Vielzahl von Serverknoten (20A-N) des Cloud-Dienstes (20) nicht in der Lage ist, den geheimen Schlüssel (K) allein aus seinem entsprechenden Unterschlüssel (Ki) zu erzeugen.

3.  Erster Netzwerkknoten (10) (Client-Vorrichtung-1) gemäß Anspruch 1, wobei der erste Netzwerkknoten (10) (Client-Vorrichtung-1) dazu konfiguriert ist, zu veranlassen, dass die anderen Netzwerkknoten (30) (Client-Vorrichtung-j) während der Authentifizierung eine oder mehrere Aufgaben (Challenge1, Challenge2) mit mindestens einem der Vielzahl von Serverknoten (20A-N) zu Authentifizierungszwecken austauschen.

4.  Erster Netzwerkknoten (10) (Client-Vorrichtung-1) gemäß Anspruch 3, wobei der erste Netzwerkknoten (10) (Client-Vorrichtung-1) dazu konfiguriert ist, eine Schwellenanzahl von Aufgaben festzulegen, die durch die anderen Netzwerkknoten (30) (Client-Vorrichtung-j) zum Bestätigen der Authentifizierung zu versuchen sind.

5.  Verfahren zum Betreiben eines ersten Netzwerkknotens (10) (Client-Vorrichtung-1), der dazu konfiguriert ist, in Kommunikation mit einem Cloud-Dienst (20) gekoppelt zu werden, der eine Vielzahl von Serverknoten (20A-N) enthält, wobei die Vielzahl von Serverknoten (20A-N) dazu konfiguriert sind, sensible Informationen (m) zu übermitteln, wobei das Verfahren umfasst:

    (a) Konfigurieren des ersten Netzwerkknotens (10) dazu, sich bei dem Cloud-Dienst (20) zu registrieren und sich danach mit anderen Netzwerkknoten (30) (Client-Vorrichtung-j) in Kommunikation mit dem Cloud-Dienst (20) zu synchronisieren;
    (b) Konfigurieren des ersten Netzwerkknotens (10) dazu, eine Zeichenkette (si) zu erzeugen, die an jeden der Vielzahl von Serverknoten (20A-N) übertragen wird, wobei der erste Netzwerkknoten (10) (Client-Vorrichtung-1) dazu konfiguriert ist, eine Antwort aus jedem der Vielzahl von Serverknoten (20A-N) zu empfangen, wobei die Antwort von der Zeichenkette (si) und einem jedem der Vielzahl von Serverknoten (20A-N) zugewiesenen Unterschlüssel (Ki) abhängt;
    (d) Konfigurieren des ersten Netzwerkknotens (10) dazu, die sensiblen Informationen (m) mit den anderen Netzwerkknoten (30) (Client-Vorrichtung-j) zu synchronisieren durch Erzeugen eines Passworts (PW), das die anderen Netzwerkknoten (30) (Client-Vorrichtung-j) verwenden müssen, um auf die sensiblen Informationen (m) zuzugreifen;
    (e) Konfigurieren des ersten Netzwerkknotens (10) dazu, die Vielzahl von Serverknoten (20A-N) zu verwenden, um die Zeichenkette (si) an die anderen Netzwerkknoten (30) (Client-Vorrichtung-j) zu senden, damit die anderen Netzwerkknoten (30) (Client-Vorrichtung-j) das Passwort (PW) und die Zeichenkette (si) als Bestätigungsantworten zurück an die Vielzahl von Serverknoten (20A-N) verwenden; und
    (f) Konfigurieren des ersten Netzwerkknotens (10) dazu, die Vielzahl von Serverknoten (20A-N) anzuweisen, die Bestätigungsantworten zu verarbeiten, um eine entsprechende Antwort zu erzeugen, aus der die anderen Netzwerkknoten (30) (Client-Vorrichtung-j) dazu konfiguriert sind, einen Stammschlüssel (RK) abzuleiten, wobei der Stammschlüssel (RK) dazu konfiguriert ist, die sensiblen Informationen (m) auf den anderen Netzwerkknoten (30) (Client-Vorrichtung-j) zu entschlüsseln, wobei der Stammschlüssel (RK) dazu konfiguriert ist, eine Authentifizierung der anderen Netzwerkknoten (30) (Client-Vorrichtung-j) mit mindestens einem der Vielzahl von Serverknoten (20A-N) durchzuführen, woraufhin die sensiblen Informationen (m) aus dem mindestens einen der Vielzahl von Serverknoten (20A-N) an die anderen Netzwerkknoten (30) (Client-Vorrichtung-j) übertragen werden, um dort entschlüsselt zu werden, um die sensiblen Informationen (m) in entschlüsselter Form bereitzustellen.

6.  Verfahren gemäß Anspruch 5, wobei das Verfahren das Verteilen einer Reihe von Unterschlüsseln (Ki), die aus einem geheimen Schlüssel (K) erzeugt wurden, an die Vielzahl von Serverknoten (20A-N) enthält, wobei ein gegebener Serverknoten der Vielzahl von Serverknoten (20A-N) des Cloud-Dienstes (20) nicht in der Lage ist, den geheimen Schlüssel (K) allein aus seinem entsprechenden Unterschlüssel (Ki) zu erzeugen.

**7.** Verfahren gemäß Anspruch 6, wobei das Verfahren das Konfigurieren des ersten Netzwerkknotens (10) (Client-Vorrichtung-1) beinhaltet, um zu veranlassen, dass die anderen Netzwerkknoten (30) (Client-Vorrichtung-j) während der Authentifizierung eine oder mehrere Aufgaben (Challenge1, Challenge2) mit mindestens einem der Vielzahl von Serverknoten (20A-N) zu Authentifizierungszwecken austauschen.

**8.** Verfahren gemäß Anspruch 7, wobei das Verfahren das Konfigurieren des ersten Netzwerkknotens (10) (Client-Vorrichtung-1) dazu beinhaltet, eine Schwellenanzahl von Aufgaben festzulegen, die durch die anderen Netzwerkknoten (30) (Client-Vorrichtung-j) zum Bestätigen der Authentifizierung zu versuchen sind.

**9.** Serverknoten (20A) eines Cloud-Dienstes (20), der dazu konfiguriert ist, in Kommunikation mit einem ersten Netzwerkknoten (10) (Client-Vorrichtung-1) gekoppelt zu werden, wobei der Serverknoten (20A) dazu konfiguriert ist, sensible Informationen (m) zu übermitteln, wobei der Serverknoten (20A) dazu konfiguriert ist:

(a) eine Anforderung aus dem ersten Netzwerkknoten (10) zu empfangen, um den ersten Netzwerkknoten (10) bei dem Cloud-Dienst (20) zu registrieren und danach den ersten Netzwerkknoten (10) mit anderen Netzwerkknoten (30) (Client-Vorrichtung-j) zu synchronisieren, die in Kommunikation mit dem Cloud-Dienst (20) gekoppelt sind;
(b) eine durch den ersten Netzwerkknoten (10) erzeugte Zeichenkette (si) zu empfangen, die an jeden einer Vielzahl von Serverknoten (20A-N) übertragen wird, wobei j eder der Vielzahl von Serverknoten (20A-N) dazu konfiguriert ist, eine Antwort an den ersten Netzwerkknoten (10) zu senden, die von der Zeichenkette (si) und einem jedem der Vielzahl von Serverknoten (20A-N) zugewiesenen Unterschlüssel (Ki) abhängig ist;
(c) die sensiblen Informationen (m) aus dem ersten Netzwerkknoten (10) mit den anderen Netzwerkknoten (30) (Client-Vorrichtung j) zu synchronisieren durch Übermitteln eines durch den ersten Netzwerkknoten (10) erzeugten Passworts (PW), das die anderen Netzwerkknoten (30) (Client-Vorrichtung-j) verwenden müssen, um auf die sensiblen Informationen (m) zuzugreifen;
(d) eine Anweisung aus dem ersten Netzwerkknoten (10) zu empfangen, um die Vielzahl von Serverknoten (20A-N) des Cloud-Dienstes (20) zu verwenden, um die Zeichenkette (si) an die anderen Netzwerkknoten (30) (Client-Vorrichtung-j) zu senden, damit die anderen Netzwerkknoten (30) (Client-Vorrichtung-j) das Passwort (PW) und die Zeichenkette (si) beim Senden von Bestätigungsantworten zurück an die Vielzahl von Serverknoten (20A-N) verwenden; und
(e) Anweisungen aus dem ersten Netzwerkknoten (10) zu empfangen, um den Cloud-Dienst (20) dazu zu konfigurieren, die Bestätigungsantworten zu verarbeiten, um eine entsprechende Antwort zu erzeugen, aus der die anderen Netzwerkknoten (30) (Client-Vorrichtung-j) dazu konfiguriert sind, einen Stammschlüssel (RK) abzuleiten, wobei der Stammschlüssel (RK) dazu konfiguriert ist, die sensiblen Informationen (m) auf den anderen Netzwerkknoten (30) (Client-Vorrichtung-j) zu entschlüsseln, wobei der Stammschlüssel (RK) dazu konfiguriert ist, eine Authentifizierung mit mindestens einem der Vielzahl von Serverknoten (20A-N) durchzuführen, woraufhin die sensiblen Informationen (m) aus dem mindestens einen der Vielzahl von Serverknoten (20A-N) an die anderen Netzwerkknoten (30) (Client-Vorrichtung j) übermittelt werden, um dort (Client-Vorrichtung-j) entschlüsselt zu werden, um die sensiblen Informationen (m) in entschlüsselter Form bereitzustellen.

**10.** Serverknoten gemäß Anspruch 9, wobei die Vielzahl von Serverknoten (20A-N) des Cloud-Dienstes (20) eine Reihe von Unterschlüsseln (Ki) darauf verteilt aufweisen, die aus einem geheimen Schlüssel (K) erzeugt wurden, wobei ein gegebener Serverknoten der Vielzahl von Serverknoten (20A-N) des Cloud-Dienstes (20) nicht in der Lage ist, den geheimen Schlüssel (K) allein aus seinem entsprechenden Unterschlüssel (Ki) zu erzeugen.

**11.** Serverknoten (20A) gemäß Anspruch 9, wobei der Serverknoten (20A) dazu konfiguriert ist, Anweisungen aus dem ersten Netzwerkknoten (10) (Client-Vorrichtung-1) zu empfangen, um zu veranlassen, dass die anderen Netzwerkknoten (30) (Client-Vorrichtung-j) während der Authentifizierung eine oder mehrere Aufgaben (Challenge1, Challenge2) mit mindestens einem der Vielzahl von Serverknoten (20A-N) zu Authentifizierungszwecken austauschen.

**12.** Zweiter Netzwerkknoten (30A) (Client-Vorrichtung-j), der dazu konfiguriert ist, in Kommunikation mit einem Cloud-Dienst (20) gekoppelt zu werden, der eine Vielzahl von Serverknoten (20A-N) enthält, wobei der zweite Netzwerkknoten (30A) dazu konfiguriert ist, sensible Informationen (m) zu empfangen, die aus einer Vielzahl von Serverknoten (20A-N) übermittelt werden, wobei der zweite Netzwerkknoten (30A) dazu konfiguriert ist, sich mit einem ersten Netzwerkknoten (10) (Client-Vorrichtung-1) zu synchronisieren, nachdem der erste Netzwerkknoten (10) bei dem Cloud-Dienst (20) registriert ist, wobei der erste Netzwerkknoten (10) dazu konfiguriert ist, eine Zeichenkette (si) zu erzeugen, die an jeden der Vielzahl von Serverknoten (20A-N) übertragen wird, wobei jeder der Vielzahl von Serverknoten (20A-N) dazu eingerichtet ist, durch Erzeugen einer Antwort zu antworten, die von der Zeichenkette (si) und einem jedem der Vielzahl von Serverknoten (20A-N) zugewiesen Unterschlüssel (Ki) abhängig ist; wobei

(a) der zweite Netzwerkknoten (30A) dazu konfiguriert ist, ein durch den ersten Netzwerkknoten (10) erzeugtes Passwort (PW) zu empfangen, das der zweite Netzwerkknoten (30A) verwenden muss, um auf die sensiblen Informationen (m) zuzugreifen, wobei das Passwort (PW) dazu konfiguriert ist, die sensiblen Informationen (m) mit dem zweiten Netzwerkknoten (30A) zu synchronisieren;

(b) der zweite Netzwerkknoten (30A) dazu konfiguriert ist, eine Zeichenkette (si) zu empfangen, die durch den ersten Netzwerkknoten (10) eingerichtet ist, der die Vielzahl von Serverknoten (20A-N) anweist, die Zeichenkette (si) an den zweiten Netzwerkknoten (30A) zu senden, damit der zweite Netzwerkknoten (30A) das Passwort (PW) und die Zeichenkette (si) als Antworten verwendet, die zurück an die Vielzahl von Serverknoten (20A-N) übertragen werden; und

(c) der zweite Netzwerkknoten (30A) dazu konfiguriert ist, eine durch die Vielzahl von Serverknoten (20A-N) erzeugte Antwort zu empfangen, die die aus dem zweiten Netzwerkknoten (30A) empfangenen Antworten verarbeitet, und eine entsprechende Antwort zu erzeugen, aus der der zweite Netzwerkknoten (30A) dazu konfiguriert ist, einen Stammschlüssel (RK) abzuleiten, wobei der Stammschlüssel (RK) dazu konfiguriert ist, die sensiblen Informationen (m) auf dem zweiten Netzwerkknoten (30A) (Client-Vorrichtung-j) zu entschlüsseln, wobei der Stammschlüssel (RK) dazu konfiguriert ist, eine Authentifizierung mit mindestens einem der Serverknoten (20) durchzuführen, woraufhin die sensiblen Informationen (m) aus dem mindestens einen der Vielzahl von Serverknoten (20A-N) empfangen werden, um entschlüsselt zu werden (Client-Vorrichtung-j), um die sensiblen Informationen (m) in entschlüsselter Form bereitzustellen.

13. Zweiter Netzwerkknoten (30A) gemäß Anspruch 12, wobei die Vielzahl von Serverknoten (20A-N) eine Reihe von Unterschlüsseln (Ki) darauf verteilt aufweisen, die aus einem geheimen Schlüssel (K) erzeugt wurden, wobei ein gegebener Serverknoten der Vielzahl von Serverknoten (20A-N) des Cloud-Dienstes (20) nicht in der Lage ist, den geheimen Schlüssel (K) allein aus seinem entsprechenden Unterschlüssel (Ki) zu erzeugen.

14. Zweiter Netzwerkknoten (30A) (Client-Vorrichtung-j) gemäß Anspruch 12 oder 13, wobei der zweite Netzwerkknoten (30A) (Client-Vorrichtung-j) dazu konfiguriert ist, während der Authentifizierung eine oder mehrere Aufgaben (Challenge1, Challenge2) mit mindestens einem der Vielzahl von Serverknoten (20A-N) zu Authentifizierungszwecken auszutauschen.

15. Zweiter Netzwerkknoten (30A) (Client-Vorrichtung-j) gemäß Anspruch 14, wobei eine Schwellenanzahl von Aufgaben durch den ersten Knoten (10) definiert wird, die durch den zweiten Netzwerkknoten (30A) zum Bestätigen der Authentifizierung zu versuchen sind.

## Revendications

1. Premier noeud de réseau (10) (dispositif client-1) qui est configuré pour être couplé en communication par l'intermédiaire d'un service en nuage (20) avec d'autres noeuds de réseau (dispositif clientj) (30), dans lequel le service en nuage (20) inclut une pluralité de noeuds de serveur (20A-N), dans lequel la pluralité de noeuds de serveur (20A-N) sont configurés pour communiquer des informations sensibles (m), dans lequel le premier noeud de réseau (10) est configuré :

(a) pour s'enregistrer auprès du service en nuage (20) et après cela pour se synchroniser avec d'autres noeuds de réseau (30) (dispositif client-j) en communication avec le service en nuage (20) ;

(b) pour générer une chaîne (si) que le premier noeud de réseau (10) transmet à chacun de la pluralité de noeuds de serveur (20A-N), dans lequel le premier noeud de réseau (10) est configuré pour recevoir une réponse à partir de chacun de la pluralité de noeuds de serveur (20A-N), dans lequel la réponse est une fonction de la chaîne (si) et d'une sous-clef (Ki) attribuée à chacun de la pluralité de noeuds de serveur (20AN) ;

(c) pour générer un mot de passe (PW) pour les autres noeuds de réseau (30) (dispositif client-j) à utiliser pour accéder aux informations sensibles (m), dans lequel le mot de passe (PW) est configuré pour synchroniser les informations sensibles (m) avec les autres noeuds de réseau (30) (dispositif clientj) ;

(d) pour donner l'instruction à la pluralité de noeuds de serveur (20A-N) d'envoyer la chaîne (si) aux autres noeuds de réseau (30) (dispositif client-j), pour que les autres noeuds de réseau (30) (dispositif clientj) utilisent le mot de passe (PW) et la chaîne (si) en tant que réponses de confirmation en retour à la pluralité de noeuds de serveur (20AN) ; et

(e) pour donner l'instruction à la pluralité de noeuds de serveur (20A-N) de traiter les réponses de confirmation pour générer une réponse correspondante à partir de laquelle les autres noeuds de réseau (30) (dispositif client-j) sont configurés pour déduire une clef racine (RK) pour déchiffrer les informations sensibles (m), aux autres noeuds de réseau (30) (dispositif client-j), dans lequel la clef racine (RK) est configurée pour réaliser une authentification des autres noeuds de réseau (30) (dispositif client-j) avec au moins un de la pluralité de noeuds de serveur (20A-N), après quoi les informations sensibles (m) sont transmises depuis l'au moins un de la pluralité de noeuds de serveur (20A-N) aux autres noeuds de réseau (30) (dispositif client-j) pour être déchiffrées pour fournir les informations sensibles (m).

2. Premier noeud de réseau (10) (dispositif client-1) selon la revendication 1, dans lequel la pluralité de noeuds de serveur (20A-N) ont, distribuées à ceux-ci, une série de sous-clefs (Ki) générées à partir d'une clef secrète (K), dans lequel un noeud de serveur donné de la pluralité de noeuds de serveur (20A-N) du service en nuage (20) est incapable de générer la clef secrète (K) seulement à partir de sa sous-clef correspondante (Ki).

3. Premier noeud de réseau (10) (dispositif client-1) selon la revendication 1, dans lequel le premier noeud de réseau (10) (dispositif client-1) est configuré pour faire en sorte que les autres noeuds de réseau (30) (dispositif client-j), durant l'authentification, échangent une ou plusieurs tâches (Défi 1, Défi 2) avec au moins un de la pluralité de noeuds de serveur (20A-N) dans des buts d'authentification.

4. Premier noeud de réseau (10) (dispositif client-1) selon la revendication 3, dans lequel le premier noeud de réseau (10) (dispositif client-1) est configuré pour régler un nombre seuil de tâches destinées à faire l'objet de tentatives effectuées par les autres noeuds de réseau (30) (dispositif clientj) pour confirmer l'authentification.

5. Procédé pour faire fonctionner un premier noeud de réseau (10) (dispositif client-1) qui est configuré pour être couplé en communication avec un service en nuage (20) incluant une pluralité de noeuds de serveur (20A-N), dans lequel la pluralité de noeuds de serveur (20A-N) sont configurés pour communiquer des informations sensibles (m), dans lequel le procédé inclut :

   (a) la configuration du premier noeud de réseau (10) pour qu'il s'enregistre auprès du service en nuage (20) et après cela pour qu'il se synchronise avec d'autres noeuds de réseau (30) (dispositif client-j) en communication avec le service en nuage (20) ;
   (b) la configuration du premier noeud de réseau (10) pour qu'il génère une chaîne (si) qui est transmise à chacun de la pluralité de noeuds de serveur (20A-N), dans lequel le premier noeud de réseau (10) (dispositif client-1) est configuré pour recevoir une réponse à partir de chacun de la pluralité de noeuds de serveur (20A-N), dans lequel la réponse est une fonction de la chaîne (si) et d'une sous-clef (Ki) attribuée à chacun de la pluralité de noeuds de serveur (20A-N) ;
   (d) la configuration du premier noeud de réseau (10) pour qu'il synchronise les informations sensibles (m) avec les autres noeuds de réseau (30) (dispositif clientj) en générant un mot de passe (PW) pour les autres noeuds de réseau (30) (dispositif client-j) à utiliser pour accéder aux informations sensibles (m) ;
   (e) la configuration du premier noeud de réseau (10) pour qu'il utilise la pluralité de noeuds de serveur (20A-N) pour envoyer la chaîne (si) aux autres noeuds de réseau (30) (dispositif client-j), pour que les autres noeuds de réseau (30) (dispositif client-j) utilisent le mot de passe (PW) et la chaîne (si) en tant que réponses de confirmation en retour à la pluralité de noeuds de serveur (20A-N) ; et
   (f) la configuration du premier noeud de réseau (10) pour qu'il donne l'instruction à la pluralité de noeuds de serveur (20A-N) de traiter les réponses de confirmation pour générer une réponse correspondante à partir de laquelle les autres noeuds de réseau (30) (dispositif clientj) sont configurés pour déduire une clef racine (RK), dans lequel la clef racine (RK) est configurée pour déchiffrer les informations sensibles (m), aux autres noeuds de réseau (30) (dispositif clientj), dans lequel la clef racine (RK) est configurée pour réaliser une authentification des autres noeuds de réseau (30) (dispositif client-j) avec au moins un de la pluralité de noeuds de serveur (20A-N), après quoi les informations sensibles (m) sont transmises depuis l'au moins un de la pluralité de noeuds de serveur (20A-N) aux autres noeuds de réseau (30) (dispositif client-j) pour être déchiffrées dans ceux-ci (dispositif client-j) pour fournir les informations sensibles (m) sous forme déchiffrée.

6. Procédé selon la revendication 5, dans lequel le procédé inclut la distribution, à la pluralité de noeuds de serveur (20A-N), d'une série de sous-clefs (Ki) générées à partir d'une clef secrète (K), dans lequel un noeud de serveur donné de la pluralité de noeuds de serveur (20A-N) du service en nuage (20) est incapable de générer la clef secrète (K) seulement à partir de sa sous-clef correspondante (Ki).

**7.** Procédé selon la revendication 6, dans lequel le procédé inclut la configuration du premier noeud de réseau (10) (dispositif client-1) pour qu'il fasse en sorte que les autres noeuds de réseau (30) (dispositif client-j), durant l'authentification, échangent une ou plusieurs tâches (Défi 1, Défi 2) avec au moins un de la pluralité de noeuds de serveur (20A-N) dans des buts d'authentification.

**8.** Procédé selon la revendication 7, dans lequel le procédé inclut la configuration du premier noeud de réseau (10) (dispositif client-1) pour qu'il règle un nombre seuil de tâches destinées à faire l'objet de tentatives effectuées par les autres noeuds de réseau (30) (dispositif clientj) pour confirmer l'authentification.

**9.** Noeud de serveur (20A) d'un service en nuage (20) qui est configuré pour être couplé en communication avec un premier noeud de réseau (10) (dispositif client-1), dans lequel le noeud de serveur (20A) est configuré pour communiquer des informations sensibles (m), dans lequel le noeud de serveur (20A) est configuré pour :

(a) recevoir une demande, à partir du premier noeud de réseau (10), d'enregistrer le premier noeud de réseau (10) auprès du service en nuage (20) et après cela pour synchroniser le premier noeud de réseau (10) avec d'autres noeuds de réseau (30) (dispositif client-j) couplés en communication avec le service en nuage (20) ;
(b) recevoir une chaîne (si) générée par le premier noeud de réseau (10) qui est transmise à chacun d'une pluralité de noeuds de serveur (20A-N), dans lequel chacun de la pluralité de noeuds de serveur (20A-N) est configuré pour envoyer une réponse au premier noeud de réseau (10) qui est une fonction de la chaîne (si) et d'une sous-clef (Ki) attribuée à chacun de la pluralité de noeuds de serveur (20A-N) ;
(c) synchroniser les informations sensibles (m) provenant du premier noeud de réseau (10) avec les autres noeuds de réseau (30) (dispositif client-j) en communiquant un mot de passe (PW) généré par le premier noeud de réseau (10) pour les autres noeuds de réseau (30) (dispositif client-j) à utiliser pour accéder aux informations sensibles (m) ;
(d) recevoir une instruction à partir du premier noeud de réseau (10) d'utiliser la pluralité de noeuds de serveur (20A-N) du service en nuage (20) pour envoyer la chaîne (si) aux autres noeuds de réseau (30) (dispositif client-j), pour que les autres noeuds de réseau (30) (dispositif clientj) utilisent le mot de passe (PW) et la chaîne (si) lors de l'envoi de réponses de confirmation en retour à la pluralité de noeuds de serveur (20A-N) ; et
(e) recevoir des instructions à partir du premier noeud de réseau (10) de configurer le service en nuage (20) pour qu'il traite les réponses de confirmation pour générer une réponse correspondante à partir de laquelle les autres noeuds de réseau (30) (dispositif client-j) sont configurés pour déduire une clef racine (RK), dans lequel la clef racine (RK) est configurée pour déchiffrer les informations sensibles (m), aux autres noeuds de réseau (30) (dispositif clientj), dans lequel la clef racine (RK) est configurée pour réaliser une authentification avec au moins un de la pluralité de noeuds de serveur (20A-N), après quoi les informations sensibles (m) sont communiquées depuis l'au moins un de la pluralité de noeuds de serveur (20A-N) aux autres noeuds de réseau (30) (dispositif client-j) pour être déchiffrées dans ceux-ci (dispositif client-j) pour fournir les informations sensibles (m) sous forme déchiffrée.

**10.** Noeud de serveur selon la revendication 9, dans lequel la pluralité de noeuds de serveur (20A-N) du service en nuage (20) ont, distribuées à ceux-ci, une série de sous-clefs (Ki) générées à partir d'une clef secrète (K), dans lequel un noeud de serveur donné de la pluralité de noeuds de serveur (20A-N) du service en nuage (20) est incapable de générer la clef secrète (K) seulement à partir de sa sous-clef correspondante (Ki).

**11.** Noeud de serveur (20A) selon la revendication 9, dans lequel le noeud de serveur (20A) est configuré pour recevoir des instructions à partir du premier noeud de réseau (10) (dispositif client-1) pour faire en sorte que les autres noeuds de réseau (30) (dispositif client-j), durant l'authentification, échangent une ou plusieurs tâches (Défi 1, Défi 2) avec au moins un de la pluralité de noeuds de serveur (20A-N) dans des buts d'authentification.

**12.** Second noeud de réseau (30A) (dispositif clientj) qui est configuré pour être couplé en communication avec un service en nuage (20) incluant une pluralité de noeuds de serveur (20A-N), dans lequel le second noeud de réseau (30A) est configuré pour recevoir des informations sensibles (m) communiquées depuis une pluralité de noeuds de serveur (20A-N), dans lequel le second noeud de réseau (30A) est configuré pour se synchroniser avec un premier noeud de réseau (10) (dispositif client-1) après que le premier noeud de réseau (10) est enregistré auprès du service en nuage (20), dans lequel le premier noeud de réseau (10) est configuré pour générer une chaîne (si) qui est transmise à chacun de la pluralité de noeuds de serveur (20A-N), dans lequel chacun de la pluralité de noeuds de serveur (20A-N) est agencé pour répondre en générant une réponse qui est une fonction de la chaîne (si) et d'une sous-clef (Ki) attribuée à chacun de la pluralité de noeuds de serveur (20A-N) ; dans lequel

(a) le second noeud de réseau (30A) est configuré pour recevoir un mot de passe (PW), généré par le premier noeud de réseau (10), pour que le second noeud de réseau (30A) l'utilise pour accéder aux informations sensibles (m), dans lequel le mot de passe (PW) est configuré pour synchroniser les informations sensibles (m) avec le second noeud de réseau (30A) ;

(b) le second noeud de réseau (30A) est configuré pour recevoir une chaîne (si), telle qu'agencée par le premier noeud de réseau (10), donnant l'instruction à la pluralité de noeuds de serveur (20A-N) d'envoyer la chaîne (si) au second noeud de réseau (30A), pour que le second noeud de réseau (30A) utilise le mot de passe (PW) et la chaîne (si) en tant que réponses transmises en retour à la pluralité de noeuds de serveur (20A-N) ; et

(c) le second noeud de réseau (30A) est configuré pour recevoir une réponse générée par la pluralité de noeuds de serveur (20A-N) traitant les réponses reçues à partir du second noeud de réseau (30A) et pour générer une réponse correspondante à partir de laquelle le second noeud de réseau (30A) est configuré pour déduire une clef racine (RK), dans lequel la clef racine (RK) est configurée pour déchiffrer les informations sensibles (m), au second noeud de réseau (30A) (dispositif clientj), dans lequel la clef racine (RK) est configurée pour réaliser une authentification avec au moins un des noeuds de serveur (20), après quoi les informations sensibles (m) sont reçues à partir de l'au moins un de la pluralité de noeuds de serveur (20A-N) pour être déchiffrées (dispositif client-j) pour fournir les informations sensibles (m) sous forme déchiffrée.

13. Second noeud de réseau (30A) selon la revendication 12, dans lequel la pluralité de noeuds de serveur (20A-N) ont, distribuées à ceux-ci, une série de sous-clefs (Ki) générées à partir d'une clef secrète (K), dans lequel un noeud de serveur donné de la pluralité de noeuds de serveur (20A-N) du service en nuage (20) est incapable de générer la clef secrète (K) seulement à partir de sa sous-clef correspondante (Ki).

14. Second noeud de réseau (30A) (dispositif client-j) selon la revendication 12 ou 13, dans lequel le second noeud de réseau (30A) (dispositif client-j) est configuré, durant l'authentification, pour échanger une ou plusieurs tâches (Défi 1, Défi 2) avec au moins un de la pluralité de noeuds de serveur (20A-N) dans des buts d'authentification.

15. Second noeud de réseau (30A) (dispositif client-j) selon la revendication 14, dans lequel un nombre seuil de tâches est défini par le premier noeud (10), destinées à faire l'objet de tentatives effectuées par le second noeud de réseau (30A) pour confirmer l'authentification.

CLOUD SERVICE
20

SERVER
NODE
20A

SERVER
NODE
20B

SERVER
NODE
20N

FIRST
NETWORK
NODE
[CLIENT
DEVICE-1]
10

SECOND
NETWORK
NODE
30A

OTHER
NETWORK
NODES
[CLIENT DEVICE-
J]
30

FIG. 1

CONFIGURING A FIRST NETWORK NODE TO
REGISTER ITSELF TO CLOUD SERVICE AND
THEREAFTER TO SYNCHRONIZE ITSELF TO
OTHER NETWORK NODES IN COMMUNICATION
WITH THE CLOUD SERVICE

202

CONFIGURING THE FIRST NETWORK NODE TO
GENERATE A STRING (si) THAT IS TRANSMITTED
TO EACH SERVER NODE AND TO RECEIVE A
RESPONSE FROM EACH SERVER NODE THAT THE
RESPONSE IS A FUNCTION OF THE STRING (si)
AND A SUB-KEY (Ki) ALLOCATED TO EACH
SERVER NODE

204

CONFIGURING THE FIRST NETWORK NODE TO
SYNCHRONIZE THE SENSITIVE INFORMATION
TO THE OTHER NETWORK NODES BY
GENERATING A PASSWORD FOR THE OTHER
NETWORK NODES TO USE TO ACCESS THE
SENSITIVE INFORMATION

206

A

200

**FIG. 2A**

A

CONFIGURING THE FIRST NETWORK NODE TO USE THE ONE OR MORE SERVER NODES TO SEND THE STRING (si) TO THE OTHER NETWORK NODES, FOR THE OTHER NETWORK NODES TO USE THE PASSWORD AND THE STRING (si) AS CONFIRMATION RESPONSES BACK TO THE ONE OR MORE SERVER NODES

208

CONFIGURING THE FIRST NETWORK NODE TO INSTRUCT THE ONE OR MORE SERVER NODES TO PROCESS THE CONFIRMATION RESPONSES TO GENERATE A CORRESPONDING RESPONSE FROM WHICH THE OTHER NETWORK NODES ARE ABLE TO DERIVE A ROOT KEY; THE ROOT KEY IS USEABLE FOR DECRYPTING THE SENSITIVE INFORMATION AT THE OTHER NETWORK NODES; THE ROOT KEY IS USEABLE TO PERFORM AN AUTHENTICATION OF THE OTHER NETWORK NODES WITH AT LEAST ONE OF THE SERVER NODES, WHEREAFTER THE SENSITIVE INFORMATION IS TRANSMITTED FROM THE AT LEAST ONE OF THE SERVER NODES TO THE OTHER NETWORK NODES TO BE DECRYPTED THEREAT TO PROVIDE THE SENSITIVE INFORMATION IN DECRYPTED FORM

210

**FIG. 2B**

200

| FIRST NETWORK NODE [CLIENT DEVICE-1] 10 | SERVER NODES [SERVER-I] 20A-N | OTHER NETWORK NODES [CLIENT DEVICE-J] 30 |

REGISTERING ITSELF TO THE CLOUD SERVICE

302

GENERATING A STRING AND TRANSMITTING THE STRING

304

RECEIVING A RESPONSE FROM EACH SERVER NODE

306

308 GENERATING A PASSWORD FOR THE OTHER NETWORK NODES

INSTRUCTING THE SERVER NODES TO SEND THE STRING TO THE OTHER NETWORK NODES

310

INSTRUCTING THE SEVER NODES TO PROCESS THE CONFIRMATION RESPONSES FROM THE OTHER NETWORK NODES AND TO GENERATE A CORRESPONDING RESPONSE

312

TRANSMITTING THE SENSITIVE INFORMATION FROM ONE OF THE SERVER NODES

314

300

**FIG. 3**

CONFIGURING THE SERVER NODE TO RECEIVE A
REQUEST FROM THE FIRST NETWORK NODE TO
REGISTER THE FIRST NETWORK NODE TO THE
CLOUD SERVICE AND THEREAFTER TO
SYNCHRONIZE THE FIRST NETWORK NODE TO
OTHER NTEWORK NODES IN COMMUNICATION
WITH THE CLOUD SERVICE

402

CONFIGURING THE SERVER NODE TO RECEIVE A
STRING GENERATED BY THE FIRST NETWORK
NODE THAT IS TRANSMITTED TO EACH OF ONE OR
MORE SERVER NODES AND TO RECEIVE A
RESPONSE FROM EACH OF ONE OR MORE SERVER
NODES A RESPONSE THAT IS A FUNCTION OF THE
STRING AND A SUB-KEY ALLOCATED TO EACH OF
ONE OR MORE SERVER NODES

404

CONFIGURING THE SERVER NODE TO
SYNCHRONIZE THE SENSITIVE INFORMATION
FROM THE FIRST NETWORK NODE TO THE OTHER
NETWORK NODES BY TRANSMITTING A
PASSWORD GENERATED BY THE FIRST NETWORK
NODE FOR THE OTHER NETWORK NODES TO USE
TO ACCESS THE SENSITIVE INFORMATION

406

**FIG. 4A**

B

400

B

CONFIGURING THE SERVER NODE TO RECEIVE AN
INSTRUCTION FROM THE FIRST NETWORK NODE,
TO USE THE SERVER NODES OF THE CLOUD
SERVICE TO SEND THE STRING TO THE OTHER
NETWORK NODES, FOR THE OTHER NETWORK
NODES TO USE THE PASSWORD AND THE STRING
AS CONFIRMATION RESPONSES BACK TO THE
SERVER NODES

408

CONFIGURING THE SERVER NODE TO RECEIVE
THE INSTRUCTIONS FROM THE FIRST NETWORK
NODE TO CONFIGURE THE CLOUD SERVICE TO
PROCESS THE CONFIRMATION RESPONSES TO
GENERATE A CORRESPONDING RESPONSE FROM
WHICH THE OTHER NETWORK NODES ARE ABLE
TO DERIVE A ROOT KEY, THE ROOT KEY IS
USEABLE FOR DECRYPTING THE SENSITIVE
INFORMATION AT THE OTHER NETWORK NODES
AND PERFORMING AN AUTHENTICATION WITH AT
LEAST ONE OF THE SERVER NODES, AND
WHEREAFTER THE SENSITIVE INFORMATION IS
TRANSMITTED FROM THE AT LEAST ONE OF THE
SERVER NODES TO THE OTHER NETWORK NODES
TO BE DECRYPTED THEREAT TO PROVIDE THE
SENSITIVE INFORMATION IN DECRYPTED FORM

410

**FIG. 4B**

400

| SERVER NODES [SERVER-I] 20A-N | FIRST NETWORK NODE [CLIENT DEVICE-1] 10 | OTHER NETWORK NODES [CLIENT DEVICE-J] 30 |
|---|---|---|
| SERVER NODE 20A | | |

RECEIVING A REQUEST FROM THE FIRST NETWORK NODE 502

RECEIVING A STRING GENERATED BY THE FIRST NETWORK NODE 504

506 RECEIVING A RESPONSE FROM EACH SERVER NODE

508

RECEIVING AN INSTRUCTION TO USE THE SERVER NODES TO SEND THE STRING TO THE OTHER NETWORK NODES

510

RECEIVING AN INSTRUCTION TO PROCESS THE CONFIRMATION RESPONSE FROM THE OTHER NETWORK NODES AND TO GENERATE A CORRESPONDING RESPONSE

SYNCHRONIZING THE SENSITIVE INFORMATION TO OTHER NETWORK NODES BY TRANSMITTING A PASSWORD GENERATED BY THE FIRST NETWORK NODE

512

TRANSMITTING THE SENSITIVE INFORMATION FROM ONE OF THE SERVER NODES

514

**FIG. 5**

500

CONFIGURING A SECOND NETWORK NODE TO
RECEIVE A PASSWORD GENERATED BY THE
FIRST NETWORK NODE, FOR THE SECOND
NETWORK NODE TO USE TO ACCESS THE
SENSITIVE INFORMATION, THE PASSWORD IS
USED TO SYNCHRONIZE THE SENSITIVE
INFORMATION TO THE SECOND NETWORK
NODE

602

CONFIGURING THE SECOND NETWORK NODE TO
RECEIVE A STRING AS ARRANGED BY THE FIRST
NETWORK NODE INSTRUCTING THE SERVER
NODES TO SEND THE STRING TO THE SECOND
NETWORK NODE, FOR THE SECOND NETWORK
NODE TO USE THE PASSWORD AND THE STRING
AS RESPONSES BACK TO THE SERVER NODES

604

C

600

**FIG. 6A**

C

CONFIGURING THE SECOND NETWORK NODE TO RECEIVE A RESPONSE GENERATED BY THE SERVER NODES PROCESSING THE RESPONSES RECEIVED FROM THE SECOND NETWORK NODE AND TO GENERATE A CORRESPONDING RESPONSE FROM WHICH THE SECOND NETWORK NODE IS ABLE TO DERIVE A ROOT KEY; THE ROOT KEY IS USEABLE TO DECRYPT THE SENSITIVE INFORMATION (m) AT THE SECOND NETWORK NODE AND TO PERFORM AN AUTHENTICATION OF THE SECOND NETWORK NODE WITH AT LEAST ONE OF THE SERVER NODES, AND THEREAFTER THE SENSITIVE INFORMATION IS TRANSMITTED FROM THE AT LEAST ONE OF THE SERVER NODES TO THE SECOND NETWORK NODE TO BE DECRYPTED THEREAT TO PROVIDE THE SENSITIVE INFORMATION IN DECRYPTED FORM

606

**FIG. 6B**

600

FIG. 7

**FIG. 8**

800

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PARK JAEMIN et al.** *Advanced Attribute-Based Key Management for Mobile Devices in Hybrid Clouds,* 24 August 2015